# EUROPÄISCHE PATENTSCHRIFT

(11) **EP 4 152 322 B1**
(45) Veröffentlichungstag und Bekanntmachung des Hinweises auf die Patenterteilung: **09.04.2025**
(21) Anmeldenummer: 21197181.7
(22) Anmeldetag: 16.09.2021
(51) Int. Cl.: G10L 25/87, G10L 25/45, G10L 15/22, G10L 15/04, G10L 15/18, G10L 25/78

(54) **VERFAHREN ZUR VERARBEITUNG EINES AUDIOSIGNALS, VERFAHREN ZUR STEUERUNG EINER VORRICHTUNG UND ZUGEHÖRIGES SYSTEM**
AUDIO SIGNAL PROCESSING METHOD, DEVICE CONTROL METHOD AND CORRESPONDING SYSTEM
PROCÉDÉ DE TRAITEMENT D'UN SIGNAL AUDIO, PROCÉDÉ DE COMMANDE D'UN DISPOSITIF ET SYSTÈME ASSOCIÉ

(43) Veröffentlichungstag der Anmeldung: 22.03.2023
(73) Patentinhaber: Siemens Healthineers AG, 91301 Forchheim (DE)
(72) Erfinder: Kuhrt, Sören, 91056 Erlangen (DE); Markuszewska, Iwona, 91054 Erlangen (DE)
(74) Vertreter: Siemens Healthineers Patent Attorneys

(56) Entgegenhaltungen:
- US-A1- 2019 378 493
- US-A1- 2021 027 780
- MAAS ROLAND ET AL: "Combining Acoustic Embeddings and Decoding Features for End-of-Utterance Detection in Real-Time Far-Field Speech Recognition Systems", 2018 IEEE INTERNATIONAL CONFERENCE ON ACOUSTICS, SPEECH AND SIGNAL PROCESSING (ICASSP), IEEE, 15 April 2018 (2018-04-15), pages 5544 - 5548, XP033403996, DOI: 10.1109/ICASSP.2018.8461478
- LIU BAIYANG ET AL: "Accurate endpointing with expected pause duration", INTERSPEECH 2015, 6 September 2015 (2015-09-06), ISCA, pages 2912 - 2916, XP055895594, Retrieved from the Internet <URL:https://assets.amazon.science/55/2b/9f6f9bfa46d0814221a093a5f0fd/accurate-endpointing-with-expected-pause-duration.pdf> DOI: 10.21437/Interspeech.2015-449

## Beschreibung

Die Erfindung betrifft ein Verfahren zur Verarbeitung eines eine Spracheingabe einer Bedienperson enthaltenden Audiosignals, ein darauf basierendes Verfahren zur Steuerung einer Vorrichtung sowie ein entsprechendes System. Insbesondere betrifft die Erfindung dabei ein Verfahren zur Steuerung einer medizinischen Vorrichtung sowie ein entsprechendes medizinisches System aufweisend eine medizinische Vorrichtung.

Medizinische Vorrichtungen werden typischerweise zur Behandlung und/oder Untersuchung eines Patienten eingesetzt. Zur Untersuchung eines Patienten werden beispielsweise medizinische bildgebende Modalitäten als medizinische Vorrichtungen verwendet. Solche bildgebenden Modalitäten können z.B. Magnetresonanzvorrichtungen, Computertomographievorrichtungen, PET-Vorrichtungen (Positronen-Emissions-Tomographie-Vorrichtungen) usw. umfassen. Ferner werden zur Behandlung eines Patienten Interventions- und/oder Therapievorrichtungen eingesetzt, wie etwa eine Strahlen- bzw. Radiotherapievorrichtung, eine Vorrichtung zur Durchführung eines insbesondere minimalinvasiven Eingriffs und dergleichen. Dabei wird die Behandlung und/oder Untersuchung des Patienten mittels der medizinischen Vorrichtung typischerweise von einem Bedienpersonal, beispielsweise Pflegepersonal, technischem Personal, Röntgenassistenzpersonal oder Ärztinnen, unterstützt.

Vor und während der Durchführung einer Behandlung und/oder Untersuchung eines Patienten mit einer solchen medizinischen Vorrichtung sind üblicherweise verschiedene Einstellungen an der medizinischen Vorrichtung vorzunehmen, wie beispielsweise eine Eingabe von Patientendaten, eine Einstellung verschiedener Geräteparameter und dergleichen. Diese Schritte werden typischerweise von dem Bedienpersonal durchgeführt, wobei die Vornahme der Einstellungen der medizinischen Vorrichtung typischerweise über eine an der Vorrichtung bereitgestellte physische Benutzerschnittstelle erfolgt, in welche eine Bedienperson Eingaben vornehmen kann.

Um solche medizinischen Vorrichtungen wirtschaftlich zu betreiben, ist ein reibungsloser Arbeits- bzw. Verfahrensablauf wünschenswert. Insbesondere soll die Vornahme von Einstellungen so einfach wie möglich gestaltet werden. Die DE 10 2006 045 719 B4 beschreibt in dieser Hinsicht ein medizinisches System mit Spracheingabevorrichtung, bei dem spezifische Funktionen des Systems mittels einer Sprachsteuerung aktiviert und deaktiviert werden können. Dabei wird ein mit der Spracheingabevorrichtung erfasstes Audiosignal mit einem Sprachanalysemodul verarbeitet, um ein oder mehrere Sprachbefehle einer Bedienperson zu ermitteln.

Die US 2019 / 0 378 493 A1 und US 2021/0027780 A1 offenbaren Verfahren und Vorrichtungen zum Festlegen des Endes einer Spracheingabe

Bei der Sprachsteuerung komplexer Systeme entsteht häufig ein Zielkonflikt zwischen der für viele Anwendungen erforderlichen Geschwindigkeit der Sprachanalyse und einer möglichst korrekten und vollständigen Erfassung der durch natürliche Sprache formulierten Nutzerintention der Bedienperson. Zu lange Analysedauern können zu unnötigen Wartezeiten für die Bedienperson und damit zu Frustration führen. Eine allein auf Geschwindigkeit bedachte Sprachanalyse kann umgekehrt zur Ausführung einer falschen oder unvollständigen Anweisung führen und Fehler verursachen, was vor allem im medizinischen Kontext häufig nicht akzeptabel ist.

Es ist folglich eine Aufgabe der vorliegenden Erfindung, dieses Problem zu lösen und ein Verfahren zur Verarbeitung eines Audiosignals bereitzustellen, dass eine in dieser Hinsicht verbesserte Ermittlung von Sprachbefehlen einer Bedienperson gestattet. Insbesondere soll ein solches Verfahren rasche Verarbeitungsdauern mit einer möglichst fehlerfreien Erfassung der tatsächlichen Nutzerintention kombinieren. Es ist ferner eine Aufgabe der vorliegenden Erfindung, auf dieser Grundlage ein Verfahren zur Steuerung einer gegenständlichen Vorrichtung anzugeben, wobei die gegenständliche Vorrichtung insbesondere eine medizinische Vorrichtung aufweisen kann. Ferner ist es eine Aufgabe der vorliegenden Erfindung, ein - insbesondere medizinisches - System umfassend die gegenständliche Vorrichtung und eine entsprechende (d.h. die Verfahren ausführende) Sprachanalysevorrichtung anzugeben.

Gemäß der Erfindung wird die gestellte Aufgabe mit einem Verfahren zur Verarbeitung eines Audiosignals, einem Verfahren zur Steuerung einer gegenständlichen Vorrichtung, einer Sprachanalysevorrichtung, einem System aufweisend die Sprachanalysevorrichtung, einem Computerprogramprodukt sowie einem computerlesbaren Speichermedium gemäß dem Hauptanspruch und den nebengeordneten Ansprüchen gelöst. Vorteilhafte Weiterbildungen sind in den abhängigen Ansprüchen angegeben.

Nachstehend wird die erfindungsgemäße Lösung der Aufgabe sowohl in Bezug auf die beanspruchten Vorrichtungen als auch in Bezug auf die beanspruchten Verfahren beschrieben. Hierbei erwähnte Merkmale, Vorteile oder alternative Ausführungsformen sind ebenso auch auf die anderen beanspruchten Gegenstände zu übertragen und umgekehrt. Mit anderen Worten können die gegenständlichen Ansprüche (die beispielsweise auf Sprachanalysevorrichtungen und zugehöre Systeme gerichtet sind) auch mit den Merkmalen weitergebildet sein, die in Zusammenhang mit einem Verfahren beschrieben oder beansprucht sind. Die entsprechenden funktionalen Merkmale des Verfahrens werden dabei durch entsprechende gegenständliche Merkmale ausgebildet.

Gemäß einem Aspekt der Erfindung wird ein Computer-implementiertes Verfahren zur Verarbeitung eines Audiosignals bereitgestellt. Das Verfahren umfasst mehrere Schritte. Ein Schritt ist auf ein Empfangen des Audiosignals gerichtet. Ein weiterer Schritt ist auf ein Erkennen eines Beginns einer Spracheingabe einer Bedienperson in dem Audiosignal gerichtet. Ein weiterer Schritt ist auf ein Analysieren des Audiosignals im Wesentlichen in Echtzeit ab dem erkannten Beginn der Spracheingabe zur Bereitstellung eines Sprachanalyseergebnisses gerichtet. Ein weiterer Schritt ist auf ein Festlegen eines Endes der Spracheingabe basierend auf dem Sprachanalyseergebnis gerichtet. Ein weiterer Schritt ist auf ein Bereitstellen eines Sprachdatenstroms basierend auf dem Audiosignal zwischen dem erkannten Beginn und dem festgelegten Ende gerichtet.

Das Audiosignal kann insbesondere eine Schallinformation enthalten. Das Audiosignal kann ein analoges oder digitales bzw. digitalisiertes Signal sein. Das digitalisierte Signal kann ausgehend von dem analogen Signal z.B. durch einen Analog-Digital-Wandler erzeugt werden. Entsprechend kann der Schritt des Empfangens einen Schritt des Bereitstellens eines digitalisierten Audiosignals basierend auf dem empfangenen Audiosignal bzw. ein Digitalisieren des empfangenen Audiosignals umfassen. Das Empfangen des Audiosignals kann insbesondere ein Registrieren des Audiosignals mittels eines geeigneten Sensors, beispielsweise eines akustischen Sensors wie etwa einem Mikrophon umfassen.

Das Audiosignal kann dabei eine Kommunikation von einem Nutzer (im Folgenden auch Bedienperson), wie beispielsweise eine auszuführende Anweisung oder eine Frage, umfassen. Mit anderen Worten kann das Audiosignal eine Spracheingabe der Bedienperson in natürlicher Sprache umfassen. Als natürliche Sprache wird typischerweise eine von Menschen gesprochene Sprache bezeichnet. Natürliche Sprache kann auch einen Tonfall und/oder eine Sprachmelodie zur Modulation der Kommunikation aufweisen. Natürliche Sprachen können im Gegensatz zu formalen Sprachen strukturelle und lexikalische Uneindeutigkeiten aufweisen.

Das Verfahren sieht vor, den Beginn einer solcher Spracheingabe im Audiosignal zu erkennen. Mit anderen Worten wird eine Aktivitätserkennung durchgeführt, die anzeigt, wann das Audiosignal gesprochene Sprache enthält. Ab dem Zeitpunkt an dem eine Spracheingabe erkannt wurde, ist das Audiosignal für eine weitere Analyse relevant, um z.B. einen Inhalt der Spracheingabe der Bedienperson zu erschließen. Das Erkennen eines Beginns einer Spracheingabe kann insbesondere ein Erkennen einer menschlichen Stimme in dem Audiosignal umfassen. Dies kann mit Mitteln der Signalanalyse geschehen, indem z.B. Werte wie Frequenz, Amplitude, Modulationen usw. in dem Audiosignal erkannt werden, die für die menschliche Stimme charakteristisch sind.

Ab dem erkannten Beginn der Spracheingabe wird die in dem Audiosignal enthaltene Spracheingabe fortlaufend analysiert. Entsprechend wird ein Sprachanalyseergebnis bereitgestellt. Das Sprachanalyseergebnis kann insbesondere als ein momentanes Sprachanalyseergebnis verstanden werden, das sich im Zuge der fortlaufenden Analyse der gesprochenen Sprache der Bedienperson fortlaufend ändert. Dazu kann ein Verfahren zur Verarbeitung natürlicher Sprache eingesetzt werden. Insbesondere kann dazu ein Computerlinguistik-Algorithmus auf das Audiosignal bzw. die Spracheingabe angewendet werden. Eine Möglichkeit zur Verarbeitung der in natürlicher Sprache formulierten Spracheingabe zur Bereitstellung des Sprachanalyseergebnisses ist ein Umwandeln der in natürlicher Sprache formulierten Spracheingabe in Text (also strukturierte Sprache), mittels eines Sprache-zu-Text (Software-)Moduls (engl.: text-to-speech). Anschließend kann eine weitere Analyse zur Bereitstellung des Sprachanalyseergebnisses, beispielsweise mittels latenter semantischer Analyse (engl. latent semantic indexing, kurz LSI), dem Text eine Bedeutung beimessen. Es kann also bereits bevor die Spracheingabe beendet ist eine Sprachanalyse und insbesondere ein Verstehen der in der Spracheingabe enthaltenen natürlichen Sprache (engl.: natural language understanding, NLU) erfolgen.

Eine Analyse im Wesentlichen in Echtzeit bedeutet, dass das Audiosignal fortlaufend analysiert wird. Mit anderen Worten findet eine "rollende" Analyse des Audiosignals bzw. der darin enthaltenen Spracheingabe statt. Es wird also nicht gewartet, bis die Spracheingabe der Bedienperson abgeschlossen ist (bzw. bis ein Ende der Spracheingabe erkannt wurde), um danach die Spracheingabe ggf. im Ganzen zu analysieren.

Das Sprachanalyseergebnis wird verwendet, um ein Ende der Spracheingabe festzulegen. Mit anderen Worten wird das Ende der Spracheingabe dynamisch basierend auf dem Sprachanalyseergebnis, also z.B. basierend auf dem semantischen Gehalt der bisherigen Spracheingabe bestimmt. Es wird also kein fest vorgegebenes "Timeout" verwendet, um die Spracheingabe abzubrechen. Stattdessen wird die Zeitspanne innerhalb des Audiosignals, die für eine weitere Analyse des Sinngehalts der Spracheingabe der Bedienperson relevant ist, basierend auf einer fortlaufenden "Vor-Analyse" adaptiert.

Basierend auf dem so festgelegten Ende und dem erkannten Anfang wird sodann ein Sprachdatenstrom bereitgestellt. Der Sprachdatenstrom kann z.B. das Audiosignal zwischen dem erkannten Beginn und festgelegtem Ende umfassen oder auf diesem basieren. Gemäß einigen Implementierungen kann der Sprachdatenstrom das digitalisierte Audiosignal zwischen dem erkannten Beginn und festgelegtem Ende umfassen oder auf diesem basieren. Falls das Sprachanalyseergebnis bereits ein Transkript des Audiosignals bzw. der Spracheingabe in Text umfasst, kann der Sprachdatenstrom auch ein solches Transkript umfassen oder darauf basieren. Bereitgestellt werden kann der Sprachdatenstrom beispielsweise in Form einer Aufzeichnung des Audiosignals und/oder der Spracheingabe zwischen dem erkannten Beginn und dem festgelegten Ende. Entsprechend kann der Schritt des Bereitstellens ein Aufzeichnen des Audiosignals und/oder der Spracheingabe zwischen dem erkannten Beginn und dem festgelegten Ende und ein Bereitstellen der Aufzeichnung als den Sprachdatenstrom umfassen. Bereitgestellt werden kann der Sprachdatenstrom dabei insbesondere zur weiteren Analyse des Sprachdatenstroms, z.B. um ein oder mehrere Sprachbefehle in dem Sprachdatenstrom zu erkennen. Entsprechend kann der Schritt des Bereitstellens ein Bereitstellen des Sprachdatenstroms für ein entsprechendes Spracherkennungsmodul bzw. einen entsprechenden (zweiten) Computerlinguistik-Algorithmus umfassen bzw. ein Eingeben des Sprachdatenstroms in das Spracherkennungsmodul bzw. den entsprechenden (zweiten) Computerlinguistik-Algorithmus zur Erkennung ein oder mehrerer Sprachbefehle in dem Sprachdatenstrom umfassen.

Die obigen Merkmale wirken synergetisch dahingehend zusammen, dass die Entscheidung zum Abschluss der Spracheingabe dynamisch anhand der bisherigen Spracheingabe festgelegt werden kann. Dabei ermöglichen die kontinuierliche Auswertung der gerade gesprochenen Spracheingabe und die Verwendung der zugehörigen Ergebnisse eine wesentlich zuverlässigere Sprachende-Erkennung und damit eine deutlich bessere und zuverlässigere Bedienbarkeit. So ist es möglich, ein Ende der Spracheingabe bedarfsgerecht anhand der bisherigen Spracheingabe festzulegen. Damit kann z.B. vermieden werden, dass zu lange auf weitere Sprache des Anwenders gewartet wird, was unnötige Wartezeiten für den Anwender bedeutet. Umgekehrt kann auch vermieden werden, die Spracheingabe bzw. Aufzeichnung zu früh als beendet anzusehen, was zu einer Auswertung einer unvollständigen Anweisung führen und Fehler verursachen kann. Mit anderen Worten stellen die Verfahrensschritte eine Vorverarbeitung für eine eigentliche Spracherkennung anhand einer holistischen, d.h. nicht fortlaufenden Sprachanalyse des bereitgestellten Sprachdatenstroms dar. Durch die Vorverarbeitung wird die Sprachanalyse in die Lage versetzt, auch komplexere Kommandos zu unterstützten, ohne die Reaktion auf zeitkritische Kommandos zu verlangsamen. Das Verfahren entfaltet somit eine Wirkung außerhalb der reinen Verarbeitung, da ein Sprachdatenstrom bereitgestellt werden kann, der besser an die Gegebenheiten angepasst ist und eine bessere Sprachanalyse ermöglicht. Der Ablauf des Verfahrens wird ferner durch technische Gegebenheiten außerhalb des Sprachanalyseverfahrens bestimmt, nämlich durch die Signaleigenschaften (Frequenzanteile, Amplituden, etc.) des Audiosignals und die gesprochene Sprache der Bedienperson.

Gemäß einer Implementierung umfasst das Verfahren ferner ein Ermitteln ein oder mehrerer Sprachbefehle basierend auf dem Sprachdatenstrom. Optional umfasst das Verfahren ferner ein Bereitstellen der ermittelten Sprachbefehle.

Dieser Schritt ist auf die anschließende Verarbeitung des (gesamten) bereitgestellten Sprachdatenstroms gerichtet. Er kann insbesondere mit einem separaten zweiten Computerlinguistik-Algorithmus ausgeführt werden, der auf den Sprachdatenstrom angewendet wird. Der zweite Computerlinguistik-Algorithmus kann insbesondere ein Sprache-zu-Text (Software-)Modul (engl.: text-to-speech) aufweisen. Zur weiteren Analyse und zur Identifizierung ein oder mehrerer Sprachbefehle kann der zweite Computerlinguistik-Algorithmus zusätzlich oder alternativ ein Spracherkennungs-(Software-)Modul aufweisen (NLU-Modul), das beispielsweise mittels LSI dem Sprachdatenstrom eine Bedeutung beimessen kann.

Durch die zweigeteilte Verarbeitung (Teil 1 zur bedarfsgerechten Trunkierung der Spracheingabe und Teil 2 zur anschließenden Analyse der Spracheingabe) kann eine zuverlässige Identifizierung von Sprachbefehlen erreicht werden (die regelmäßig die Analyse der gesamten Spracheingabe bedarf). Gleichzeitig können durch den situativ adaptierten Ausschnitt aus dem Audiosignal (in Form des Sprachedatenstroms) längere und kürze Spracheingaben gleichermaßen gut unterstützt werden.

Bereitgestellt werden können die Sprachbefehle beispielsweise einer weiteren Verarbeitung insbesondere zur Erzeugung von ein oder mehreren Steuersignalen für eine Vorrichtung basierend auf den Sprachbefehlen. Ferner können die Sprachbefehle einer Bedienperson bereitgestellt werden, z.B. indem sie über eine Nutzerschnittstelle angezeigt werden. Die Bedienperson kann die bereitgestellten Sprachbefehle dann z.B. verifizieren.

Das Verfahren umfasst ferner einen Schritt des Anpassens einer adaptiven Zeitspanne basierend auf dem Sprachanalyseergebnis. Der Schritt des Festlegens des Endes der Spracheingabe umfasst dann ein Erfassen eines Zeitpunkts, an dem das Audiosignal keine Spracheingabe enthält, und ein Festlegen des Endes der Spracheingabe auf den erfassten Zeitpunkt, falls ausgehend vom erfassten Zeitpunkt innerhalb der adaptiven Zeitspanne kein neuerlicher Beginn einer Spracheingabe erkannt wird.

Gemäß dieser Implementierung kann die adaptive Zeitspanne folglich als variabler Timeout verstanden werden, nach dessen Ablauf davon ausgegangen werden kann, dass die Bedienperson nach dem Beenden einer Spracheingabe nichts weiter sagen wird. Das Erkennen des Zeitpunkts, an dem das Audiosignal keine Spracheingabe enthält, kann wie beim zuvor beschriebenen Erkennen eines Beginns einer Spracheingabe insbesondere ein Erkennen einer menschlichen Stimme in dem Audiosignal umfassen. Dies kann mit Mitteln der Signalanalyse geschehen, in dem z.B. Werte wie Frequenz, Amplitude, Modulationen usw. in dem Audiosignal erkannt werden, die für die menschliche Stimme charakteristisch sind. Mit anderen Worten kann auch das Erkennen des Zeitpunkts, an dem das Audiosignal keine Spracheingabe enthält, auf einer Aktivitätserkennung beruhen. Mit dem Erkennen des Zeitpunkts kann z.B. ein Timer getriggert werden, welcher die verstrichene Zeit misst, seit der keine menschliche Stimme mehr erkannt wurde. Die Spracheingabe wird als beendet angesehen, falls die verstrichene Zeit die adaptive Zeitspanne erreicht und keine weitere Spracheingabe erkannt wurde.

Die Verwendung eines adaptiven Timeouts stellt sicher, dass der Bedienperson nicht "das Wort abgeschnitten" wird und die

Spracheingabe möglichst vollständig erfasst wird. Durch die dynamische Anpassung der adaptiven Zeitspanne kann in Situationen, in denen mit weiteren Spracheingaben gerechnet werden muss, ein längeres Timeout gewählt werden. Gemäß einigen Implementierungen kann die adaptive Zeitspanne auch auf Null gesetzt werden, wenn etwa das Sprachanalyseergebnis eine sofortige Umsetzung eines Sprachbefehls anzeigt.

Gemäß einer Implementierung umfasst das Verfahren ferner ein Wiederholen des Schritts des Erfassens, solange bis ausgehend von dem erfassten Zeitpunkt innerhalb der adaptiven Zeitspanne kein neuerlicher Beginn einer Spracheingabe erkannt wird, wobei während des Wiederholens der Schritt des Analysierens fortlaufend durchgeführt wird und die adaptive Zeitspanne basierend auf dem so erhaltenen Sprachanalyseergebnis fortlaufend angepasst wird.

Mit anderen Worten wird die Spracheingabe erst als beendet angesehen, wenn das momentane Timeout abgelaufen ist, ohne dass die Bedienperson eine neuerliche Spracheingabe vorgenommen hat, bzw. ohne dass eine menschliche Stimme in dem Audiosignal erkannt wurde. Die fortlaufende Analyse stellt dabei sicher, dass die adaptive Zeitspanne ggf. an neue Gegebenheiten angepasst werden kann.

Gemäß einer nicht beanspruchten alternativen Implementierung umfasst das Verfahren ein Anpassen einer adaptiven Zeitspanne basierend auf dem Sprachanalyseergebnis, wobei der Schritt des Festlegens des Endes der Spracheingabe ein Festlegen des Endes der Spracheingabe nach dem Ablauf der adaptiven Zeitspanne ab dem erkannten Beginn der Spracheingabe umfasst.

Mit anderen Worten wird in dieser Implementierung also kein Timeout gesetzt, sondern es wird eine Zeitspanne definiert, nach der die Spracheingabe als beendet angesehen wird. Die adaptive Zeitspanne kann hier auch als "Cut-off" verstanden werden. Dies kann den Vorteil mit sich bringen, dass auch in einer laufenden Spracheingabe die relevante Spracheingabe als beendet angesehen werden kann. Dies kann z.B. dann der Fall sein, wenn die bisherige Spracheingabe eine sofortige Ausführung eines Befehls nahelegt (z.B. den Befehl "Stopp").

In einigen Implementierungen wird die adaptive Zeitspanne innerhalb einer minimalen Zeitspanne und einer maximalen Zeitspanne angepasst.

Damit kann sichergestellt werden, dass weder zu lange auf eine weitere Spracheingabe gewartet wird noch eine Spracheingabe zu schnell abgebrochen wird. Bezieht sich die adaptive Zeitspanne auf ein Timeout, kann die minimale Zeitspanne z.B. auf einen Wert zwischen 250 ms und 750 ms festgesetzt werden und beispielsweise 500 ms betragen. Die maximale Zeitspanne kann z.B. auf einen Wert zwischen 1000 ms und 2000 ms festgesetzt werden und beispielsweise 1500 ms betragen. Bezieht sich die adaptive Zeitspanne auf einen Cut-off, kann die minimale Zeitspanne z.B. auf einen Wert zwischen 500 ms und 3000 ms festgesetzt werden und beispielsweise 1000 ms betragen. Die maximale Zeitspanne kann z.B. auf einen Wert zwischen 1000 ms und 10000 ms festgesetzt werden und beispielsweise 5000 ms betragen

In einigen Implementierungen kann das Festlegen eines Endes der Spracheingabe ein sofortiges bzw. unmittelbares Beenden der Spracheingabe (bzw. Setzen des Endes der Spracheingabe) umfassen, wenn das Sprachanalyseergebnis z.B. ein sofortiges Ausführen eines Sprachbefehls indiziert. Dies kann z.B. dann der Fall sein, wenn in der bisherigen Spracheingabe Schlüsselwörter wie "Stopp", "schnell", "Halt" o.Ä. erkannt werden.

In einigen Implementierungen umfasst der Schritt der Analyse des Audiosignals ein Ermitteln einer bisherigen Dauer der Spracheingabe ab dem erkannten Beginn. Folglich umfasst das Sprachanalyseergebnis die bisherige Dauer der Spracheingabe. Im Schritt des Anpassens wird die adaptive Zeitspanne dann in Abhängigkeit der bisherigen Dauer adaptiert, wobei die adaptive Zeitspanne insbesondere derart adaptiert wird, dass die adaptive Zeitspanne wenigstens abschnittsweise mit der bisherigen Dauer ansteigt.

Mit anderen Worten steigt die adaptive Zeitspanne in wenigsten einem Teilbereich der bisherigen Dauern (z.B. zwischen einer minimalen Zeitspanne und einer maximalen Zeitspanne) mit der bisherigen Dauer an. Der Anstieg kann dabei z.B. linear, quadratisch, logarithmisch oder anderweitig ausgestaltet sein. Der genaue Verlauf des Anstiegs kann individuell für den Anwendungsfall gewählt und ggf. vom Anwender konfiguriert werden.

Anstelle einer festen Zeitspanne wird diese nun in Abhängigkeit der bisherigen Dauer der Spracheingabe (d.h. der verstrichenen Zeit seit erkanntem Beginn der Spracheingabe gewählt). Die Annahme dahinter ist, dass vor allem bei längeren Kommandos Denkpausen berücksichtigt werden müssen. Der Bedienperson wird in dieser Implementierung bei bereits länger andauernden Befehlen also mehr Zeit eingeräumt, die Spracheingabe auch zu beenden.

Gemäß einigen Implementierungen umfasst der Schritt der Analyse des Audiosignals ein Tokenisieren zur Segmentierung von Buchstaben, Wörtern und/oder Sätzen innerhalb des Audiosignals und das Sprachanalyseergebnis umfasst eine zugehörige Tokenisierungsinformation.

Tokenisierung bezeichnet in der Computerlinguistik die Segmentierung eines Textes in Einheiten der Buchstaben-, Wort- und Satzebene. Gemäß einigen Implementierungen kann das Tokenisieren ein Umwandeln der im Audiosignal enthaltenen Sprache in Text umfassen. Mit anderen Worten kann ein Transskript erstellt werden, das dann tokenisiert wird. Dazu kann auf eine Vielzahl an sich bekannter Verfahren zurückgegriffen werden, die z.B. auf einer Verwendung einer Formantanalyse, von Hidden-Markov-Modellen, neuronalen Netzen, elektronischen Wörterbüchern und/oder Sprachmodellen beruhen.

Durch die Verwendung der Tokenisierungsinformation kann die Struktur der Spracheingabe der Bedienperson beim Anpassen der adaptiven Zeitspanne berücksichtigt werden. Damit kann die adaptive Zeitspanne gut an die mutmaßliche Intention des Nutzers angepasst werden. In einigen Implementierungen ist z.B. denkbar, dass die Tokenisierungsinformation anzeigt, ob die Bedienperson einen momentanen Satz zu Ende gesprochen hat. Im Schritt des Bestimmens kann dann die adaptive Zeitspanne verkürzt werden, wenn die Tokenisierungsinformation anzeigt, dass die Bedienperson einen momentanen Satz zu Ende gesprochen hat. Zusätzlich oder alternativ kann die adaptive Zeitspanne verlängert werden, wenn die Tokenisierungsinformation anzeigt, dass die Bedienperson einen momentanen Satz nicht zu Ende gesprochen hat. Insbesondere kann der Schritt des Tokenisierens mit dem Anpassen der adaptiven Zeitspanne basierend auf der Tokenisierungsinformation mit der vorgenannten Anpassung der adaptiven Zeitspanne basierend auf der bisherigen Dauer der Spracheingabe kombiniert werden.

Ob ein Satz abgeschlossen ist oder nicht, kann dabei z.B. mittels einer grammatikalischen Analyse beispielsweise unter Anwendung eines Sprach- oder Grammatikmodells analysiert werden. Zusätzlich oder alternativ können Signalwörter am Ende der momentanen Spracheingabe identifiziert werden, die darauf hindeuten, dass ein Satz noch nicht abgeschlossen ist, wie z.B. "und", "und zwar..." oder "das heißt". Zusätzlich oder alternativ kann eine Sprachmelodie der Bedienperson ausgewertet werden, da eine Tonhöhe am Satzende häufig absinkt.

Gemäß einigen Implementierungen umfasst der Schritt der Analyse des Audiosignals eine semantische Analyse des Audiosignals zur Erfassung einer auf einen Sprachbefehl der Bedienperson gerichteten Nutzerintention. Entsprechend umfasst das Sprachanalyseergebnis eine entsprechende semantische Information.

Die semantische Analyse stellt mit anderen Worten darauf ab, die Bedeutung der Spracheingabe der Bedienperson zu erschließen. Insbesondere kann die semantische Analyse einen vorgelagerten Spracherkennungsschritt (speech to text) und/oder einen Tokenisierungsschritt umfassen. Insbesondere kann die semantische Analyse mit dem Anpassen der adaptiven Zeitspanne basierend auf der semantischen Information ferner mit der vorgenannten Anpassung der adaptiven Zeitspanne basierend auf der bisherigen Dauer der Spracheingabe kombiniert werden.

Durch die Berücksichtigung der Bedeutung der Spracheingabe der Bedienperson im Wege der semantischen Information kann die adaptive Zeitspanne in Abhängigkeit des bisher Gesagten und insbesondere in Abhängigkeit des mutmaßlichen Willens (Nutzerintention) der Bedienperson angepasst werden. Somit wird die Spracherkennung (NLU) in die kontinuierliche Auswertung des gerade gesprochenen Sprachsignals und die Verwendung der Ergebnisse für die Entscheidung zum Abschluss der Sprachaufnahme einbezogen. Damit kann eine zuverlässigere Sprachende-Erkennung und damit eine bessere und zuverlässigere Bedienbarkeit erreicht werden.

Gemäß einigen Implementierungen zeigt die semantische Information an, ob das Audiosignal ein oder mehrere Nutzerintentionen enthält oder nicht, wobei im Schritt des Bestimmens die adaptive Zeitspanne verkürzt wird, wenn die semantische Information anzeigt, dass das Audiosignal wenigstens eine Nutzerintention enthält und/oder die adaptive Zeitspanne verlängert wird, wenn die semantische Information anzeigt, dass das Audiosignal bisher keine Nutzerintention enthält.

Die Nutzerintention kann dabei insbesondere eine auf einen oder mehrere zu bestimmende (oder in Frage kommende) Sprachbefehle gerichtete Spracheingabe der Bedienperson sein. Die Sprachbefehle können dabei insbesondere zur Steuerung eines bestimmten gegenständlichen Geräts (oder Vorrichtung) relevante Sprachbefehle sein. Entsprechend kann ein Bereitstellen einer solchen semantischen Information ein Empfangen ein oder mehrerer möglicher Sprachbefehle sowie ein Abgleich der ein oder mehreren möglichen Sprachbefehle mit der bisherigen Spracheingabe umfassen. Die ein oder mehreren möglichen Sprachbefehle können beispielsweise in Abhängigkeit eines durch Spracheingabe zu steuernden, gegenständlichen Geräts (oder Vorrichtung) ausgewählt und/oder vorbestimmt sein.

Gemäß einigen Implementierungen indiziert bzw. enthält die semantische Information wenigstens eine Eigenschaft einer in dem Audiosignal enthaltenen Nutzerintention, wobei im Schritt des Bestimmens die adaptive Zeitspanne basierend auf der wenigstens einen Eigenschaft adaptiert wird.

Es werden also mit anderen Worten kontinuierlich bestimmte Charakteristika bzw. Eigenschaften aus der Spracheingabe extrahiert, die Einfluss auf die adaptive Zeitspanne und damit das Ende der aktuell gesprochenen Spracheingabe nehmen. Das Ermitteln einer solchen Eigenschaft im Rahmen der semantischen Information kann dabei insbesondere ein Empfangen ein oder mehrerer möglicher Sprachbefehle sowie ein Abgleichen der ein oder mehreren möglichen Sprachbefehle mit der bisherigen Spracheingabe umfassen. Die ein oder mehreren möglichen Sprachbefehle können beispielsweise in Abhängigkeit eines durch Spracheingabe zu steuernden, gegenständlichen Geräts (oder Vorrichtung) ausgewählt und/oder vorbestimmt sein. Anhand des Abgleichens kann dann auf die Eigenschaft der zugehörigen Nutzerintention geschlossen werden.

Die wenigstens eine Eigenschaft kann dabei insbesondere umfassen, wie komplex die zugehörige Nutzerintention ist, ob die zugehörige Nutzerintention vollständig ist, und/oder wie dringlich die zugehörige Nutzerintention ist. Bei der Einstellung der adaptiven Zeitspanne in Abhängigkeit dieser Eigenschaften kann die adaptive Zeitspanne beispielsweise verkürzt werden, wenn die semantische Information anzeigt, dass die zugehörige Nutzerintention vollständig ist. Umgekehrt kann die adaptive Zeitspanne beispielsweise verlängert werden, wenn die semantische Information anzeigt, dass die zugehörige Nutzerintention unvollständig ist. Ferner kann die adaptive Zeitspanne verkürzt werden, wenn die semantische Information anzeigt, dass die zugehörige Nutzerintention dringend ist bzw. eine dringende Umsetzung indiziert. Umgekehrt kann die adaptive Zeitspanne beispielsweise verlängert werden, wenn die semantische Information anzeigt, dass die zugehörige Nutzerintention keine dringende Umsetzung indiziert. Ferner kann die adaptive Zeitspanne verkürzt werden, wenn die semantische Information anzeigt, dass die zugehörige Nutzerintention wenig komplex ist. Umgekehrt kann die adaptive Zeitspanne beispielsweise verlängert werden, wenn die semantische Information anzeigt, dass die zugehörige Nutzerintention komplex ist (und ggf. weiterer Erklärungen bedarf).

Gemäß einem weiteren Aspekt wird ein Verfahren zur Steuerung einer gegenständlichen, insbesondere medizinischen, Vorrichtung bereitgestellt. Das Verfahren umfasst mehrere Schritte. Ein Schritt ist auf ein Erfassen eines Audiosignals enthaltend eine auf die Steuerung der Vorrichtung gerichtete Spracheingabe einer Bedienperson der Vorrichtung gerichtet. Ein weiterer Schritt ist auf ein Verarbeiten des Audiosignals gemäß dem vorgenannten Aspekt und ggf. möglicher Implementierungen gerichtet. Ein weiterer Schritt ist auf ein Ermitteln ein oder mehrerer Sprachbefehle basierend auf dem Sprachdatenstrom gerichtet. Ein weiterer Schritt ist auf ein Erzeugen eines oder mehrerer Steuersignale basierend auf den ein oder mehreren Sprachbefehlen gerichtet, welche Steuersignale geeignet sind, die Vorrichtung entsprechend den ermittelten Sprachbefehlen zu steuern. Ein weiterer Schritt ist auf eine Eingabe der ein oder mehreren Steuersignale in die Vorrichtung gerichtet.

Das Erfassen des Audiosignals kann im Wesentlichen wie weiter oben beschrieben implementiert sein und z.B. ein Registrieren eines Schallsignals mit einer akustischen Eingabevorrichtung wie einem Mikrofon umfassen. Durch die Verarbeitung des Audiosignals wird ein Sprachdatenstrom für die weitere Analyse bereitgestellt. Die damit verbunden Vorteile und mögliche Implementierungen entsprechen denen des vorgenannten Aspekts.

Das Verfahren sieht ferner vor, den durch das Verarbeiten des Audiosignals bereitgestellten Sprachdatenstrom weiterzuverarbeiten, um ein oder mehrere Sprachbefehle in dem Sprachdatenstrom zu identifizieren, die für die Steuerung der gegenständlichen Vorrichtung relevant sind. Insbesondere wird der Sprachdatenstrom zur Identifizierung ein oder mehrerer Sprachbefehle analysiert. Dabei können insbesondere wieder Verfahren der Spracherkennung (NLU) angewendet werden. Insbesondere kann vorgesehen sein, einzelne Worte oder Wortgruppen in dem Sprachdatenstrom zu erkennen und mit einem vordefinierten Satz möglicher Sprachbefehle für die gegenständliche Vorrichtung zu vergleichen oder in Verbindung zu bringen. Der vordefinierte Satz möglicher Sprachbefehle kann z.B. in Form einer Befehlsbibliothek vorliegen.

Mit anderen Worten wird so ein zweistufiges Verarbeitungsschema realisiert, das eine situative Trunkierung der zu analysierenden Sprachdaten mit einer holistischen Analyse der so trunkierten Sprachdaten kombiniert. Letzteres ist vorteilhaft, da durch eine ganzheitliche Analyse zusätzliche Informationen gewonnen werden können. So kann z.B. bei der Analyse von Worteinbettungen bezogen auf die Spracheingabe auf den textlichen Kontext in beide zeitlichen Richtungen zurückgegriffen werden.

Die gegenständliche Vorrichtung ist zunächst nicht weiter eingeschränkt und kann zunächst jedwede technische Vorrichtung betreffen, die für eine Sprachsteuerung ausgelegt ist. Dies kann z.B. ein digitales Diktiergerät, einen Computer, einen Bordcomputer eines Fahrzeugs, einen Roboter, eine Maschine und dergleichen umfassen. In bevorzugten Implementierungen umfasst die gegenständliche Vorrichtung eine medizinische Vorrichtung. Die medizinische Vorrichtung kann insbesondere dazu ausgebildet sein, eine medizinische Prozedur durchzuführen und/oder zu unterstützen. Die medizinische Prozedur kann eine bildgebende und/oder interventionelle und/oder therapeutische Prozedur aber auch eine Überwachung eines Patienten umfassen. Insbesondere kann die medizinische Vorrichtung eine bildgebende Modalität umfassen, wie beispielsweise ein Magnetresonanzgerät, ein Einzelphotonenemissionstomographie-Gerät (SPECT-Gerät), ein Positronen-Emissions-Tomographie-Gerät (PET-Gerät), ein Computertomograph, ein Ultraschall-Gerät, ein Röntgengerät oder ein als C-Bogen-Gerät ausgebildetes Röntgengerät. Die bildgebende Modalität kann auch ein kombiniertes medizinisches Bildgebungsgerät sein, welches eine beliebige Kombination aus mehreren der genannten bildgebenden Modalitäten umfasst. Ferner kann die medizinische Vorrichtung eine Interventions- und/oder Therapievorrichtung aufweisen, wie etwa eine Biopsievorrichtung, eine Strahlen- bzw. Radiotherapievorrichtung zur Bestrahlung eines Patienten, und/oder eine Eingriffsvorrichtung zur Durchführung eines, insbesondere minimalinvasiven, Eingriffs. Gemäß weiteren Implementierungen kann die medizinische Vorrichtung zusätzlich oder alternativ Patientenüberwachungsmodule, wie etwa ein EKG-Gerät, und/oder ein Patienten-Pflegegerät umfassen, wie etwa ein Beatmungsgerät, ein Infusionsgerät und/oder ein Dialysegerät.

Gemäß einigen Implementierungen umfasst der Schritt der Analyse des Audiosignals ein Anwenden eines ersten Computerlinguistik-Algorithmus auf das Audiosignal und der Schritt des Ermittelns ein oder mehrerer Sprachbefehle umfasst ein Anwenden eines zweiten Computerlinguistik-Algorithmus auf den Sprachdatenstrom, wobei der erste Computerlinguistik-Algorithmus von dem zweiten Computerlinguistik-Algorithmus verschieden ist.

Der erste Computerlinguistik-Algorithmus kann entsprechend dazu ausgebildet sein, ein Audiosignal derart zu bearbeiten, dass ein Sprachdatenstrom zur Weiterverarbeitung durch den zweiten Computerlinguistik-Algorithmus bereitgestellt wird. Der zweite Computerlinguistik-Algorithmus kann entsprechend dazu ausgebildet sein, basierend auf dem Sprachdatenstrom ein oder mehrere Sprachbefehle zur Steuerung der gegenständlichen Vorrichtung zu identifizieren. Gemäß einigen Implementierungen kann der erste Computerlinguistik-Algorithmus als sog.

Front-End-Algorithmus implementiert sein, der z.B. in einer lokalen Recheneinheit, wie etwa der Steuereinheit der gegenständlichen Vorrichtung oder in einem lokalen Spracherkennungsmodul, gehostet ist. Als Front-End kann die Verarbeitung insbesondere gut in Echtzeit erfolgen, sodass das Ergebnis praktisch ohne nennenswerte Zeitverzögerung erhalten werden kann. Entsprechend kann der zweite Computerlinguistik-Algorithmus als sog. Back-End-Algorithmus implementiert sein, der z.B. in einer entfernten (engl.: remote) Recheneinrichtung, wie etwa einem reellen Server-basierten Rechensystem oder einem virtuellen Cloud-Rechensystem, gehostet ist. In einer Back-End-Implementierung können insbesondere komplexe Analysealgorithmen eingesetzt werden, die eine hohe Rechenleistung erfordern. Entsprechend kann das Verfahren ein Übermitteln des Sprachdatenstroms an eine entfernte Recheneinrichtung und ein Empfangen ein oder mehrerer Analyseergebnisse von der entfernten Recheneinrichtung umfassen, auf der Grundlage welcher Analyseergebnisse dann im Schritt des Erzeugens die Sprachbefehle erzeugt werden. Alternativ können die Sprachergebnisse auch unmittelbar von der entfernten Recheneinrichtung empfangen werden.

In alternativen Implementierungen kann auch der zweite Computerlinguistik-Algorithmus als Front-End-Algorithmus implementiert sein. Umgekehrt kann auch der erste Computerlinguistik-Algorithmus als Back-End-Algorithmus implementiert sein.

Gemäß weiteren Implementierungen umfasst das Verfahren ferner ein Empfangen eines Systemzustands von der Vorrichtung, welcher Systemzustand eine Information über einen momentanen Zustand der Vorrichtung umfasst, wobei das Schritt des Festlegens zusätzlich basierend auf dem Systemzustand erfolgt.

Der Systemzustand kann dabei durch einen jeweiligen Arbeitsschritt oder eine Abfolge bzw. Sequenz von Arbeitsschritten festgelegt sein, welche die Vorrichtung gerade ausführt. Durch die Berücksichtigung des momentanen Systemzustands, kann das Ende der Spracheingabe noch zielgerichteter mit den jeweiligen Bedingungen abgestimmt werden.

Gemäß einigen Ausführungsformen ist der Systemzustand derart ausgelegt, dass er anzeigt, ob ein Zustand der Vorrichtung vorliegt, der eine rasche Umsetzung ein oder mehrerer Sprachbefehle indiziert, wobei im Schritt des Bestimmens die adaptive Zeitspanne verkürzt wird, wenn der Systemzustand anzeigt, dass ein Zustand der Vorrichtung vorliegt, der eine rasche Umsetzung ein oder mehrerer Sprachbefehle indiziert; und/oder die adaptive Zeitspanne verlängert wird, wenn der Systemzustand anzeigt, dass kein Zustand der Vorrichtung vorliegt, der eine rasche Umsetzung ein oder mehrerer Sprachbefehle indiziert.

Dadurch kann bei einem Systemzustand, der mutmaßlich ein rasches Umsetzen eines Befehls einer Bedienperson verlangt, rasch mit der Analyse des Sprachdatenstroms begonnen werden und die Reaktionszeit der Verarbeitung wird verbessert.

Gemäß einem weiteren Aspekt wird eine Sprachanalysevorrichtung zur Verarbeitung eines Audiosignals bereitgestellt. Die Sprachanalysevorrichtung weist eine Schnittstelle zum Empfangen des Audiosignals und eine Steuerungsvorrichtung auf, wobei die Steuerungsvorrichtung dazu ausgebildet ist, einen Beginn einer Spracheingabe einer Bedienperson in dem Audiosignal zu erkennen, das Audiosignal im Wesentlichen in Echtzeit ab dem erkannten Beginn der Spracheingabe zur Bereitstellung eines Sprachanalyseergebnisses zu analysieren, ein Ende der Spracheingabe basierend auf dem Sprachanalyseergebnis, insbesondere variabel, festzulegen, und einen Sprachdatenstrom basierend auf dem Audiosignal zwischen dem erkannten Beginn und dem festgelegten Ende bereitzustellen.

Die Steuerungsvorrichtung kann als zentrale oder dezentrale Recheneinheit ausgebildet sein. Die Recheneinheit kann einen oder mehrere Prozessoren aufweisen. Die Prozessoren können als zentrale Verarbeitungseinheit (ein englischer Fachausdruck hierfür ist "central processing unit", kurz CPU) und/oder als Grafikprozessor (ein englischer Fachausdruck hierfür ist "graphics processing unit", kurz GPU) ausgebildet sein. Insbesondere kann die Steuerungsvorrichtung als eine, oder als Teil einer, durch Spracheingabe zu steuernden gegenständlichen Vorrichtung implementiert sein. Alternativ kann die Steuerung als lokaler, realer und/oder Cloud-basierter Verarbeitungsserver implementiert sein. Ferner kann die Steuerung ein oder mehrere virtuelle Maschinen umfassen. Gemäß weiteren Implementierungen weist die Sprachanalysevorrichtung ferner ein Spracherkennungsmodul auf, das dazu ausgebildet ist, ein oder mehrere Sprachbefehle basierend auf dem Sprachdatenstrom zu ermitteln.

Die Schnittstelle kann allgemein zum Datenaustausch zwischen der Steuerungsvorrichtung und weiteren Komponenten ausgebildet sein. Die Schnittstelle kann in Form von einer oder mehreren einzelnen Datenschnittstellen implementiert sein, welche ein Hardware- und/oder Software-Interface, z.B. einen PCI-Bus, eine USB-Schnittstelle, eine Fire-Wire-Schnittstelle, eine ZigBee- oder eine Bluetooth-Schnittstelle aufweisen können. Die Schnittstelle kann ferner eine Schnittstelle eines Kommunikationsnetzwerks aufweisen, wobei das Kommunikationsnetzwerk ein Local Area Network (LAN), beispielsweise ein Intranet oder ein Wide Area Network (WAN) aufweisen kann. Entsprechend können die ein oder mehreren Datenschnittstellen eine LAN-Schnittstelle oder eine Wireless LAN-Schnittstelle (WLAN oder Wi-Fi) aufweisen. Die Schnittstelle kann ferner zur Kommunikation mit der Bedienperson über eine Nutzerschnittstelle ausgebildet sein. Entsprechend kann die Steuerung dazu ausgebildet sein, Sprachbefehle über die Nutzerschnittstelle anzuzeigen und diesbezügliche Nutzereingabe über die Nutzerschnittstelle zu empfangen. Insbesondere kann die Schnittstelle eine akustische Eingabevorrichtung zur Registrierung des Audiosignals umfassen.

Die Vorteile der vorgeschlagenen Vorrichtung entsprechen im Wesentlichen den Vorteilen des vorgeschlagenen Verfahrens. Merkmale, Vorteile oder alternative Ausführungsformen/Aspekte können ebenso auf die anderen beanspruchten Gegenstände übertragen werden und umgekehrt.

Gemäß einem weiteren Aspekt wird ein medizinisches System bereitgestellt, das eine Sprachanalysevorrichtung nach dem vorhergehenden Aspekt und eine vorgenannte medizinische Vorrichtung zur Durchführung einer medizinischen Prozedur umfasst.

Die Erfindung betrifft in einem weiteren Aspekt ein Computerprogrammprodukt, das ein Programm umfasst und direkt in einen Speicher einer programmierbaren Steuerung ladbar ist und Programmmittel, z.B. Bibliotheken und Hilfsfunktionen, aufweist, um ein Verfahren zur Verarbeitung eines Audiosignals bzw. ein Verfahren zur Steuerung einer Vorrichtung insbesondere gemäß den vorgenannten Implementierungen/Aspekten auszuführen, wenn das Computerprogrammprodukt ausgeführt wird.

Ferner betrifft die Erfindung in einem weiteren Aspekt ein computerlesbares Speichermedium, auf welchem lesbare und ausführbare Programmabschnitte gespeichert sind, um alle Schritte eines Verfahrens zur Verarbeitung eines Audiosignals bzw. ein Verfahren zur Steuerung einer Vorrichtung gemäß den vorgenannten Implementierungen/Aspekten auszuführen, wenn die Programmabschnitte von dem der Steuerung ausgeführt werden.

Die Computerprogrammprodukte können dabei eine Software mit einem Quellcode, der noch kompiliert und gebunden oder der nur interpretiert werden muss, oder einen ausführbaren Softwarecode umfassen, der zur Ausführung nur noch in die Verarbeitungseinheit zu laden ist. Durch die Computerprogrammprodukte können die Verfahren schnell, identisch wiederholbar und robust ausgeführt werden. Die Computerprogrammprodukte sind so konfiguriert, dass sie mittels der Recheneinheit die erfindungsgemäßen Verfahrensschritte ausführen können. Die Recheneinheit muss dabei jeweils die Voraussetzungen wie beispielsweise einen entsprechenden Arbeitsspeicher, einen entsprechenden Prozessor, eine entsprechende Grafikkarte oder eine entsprechende Logikeinheit aufweisen, sodass die jeweiligen Verfahrensschritte effizient ausgeführt werden können.

Die Computerprogrammprodukte sind beispielsweise auf einem computerlesbaren Speichermedium gespeichert oder auf einem Netzwerk oder Server hinterlegt, von wo sie in den Prozessor der jeweiligen Recheneinheit geladen werden können, der mit der Recheneinheit direkt verbunden oder als Teil der Recheneinheit ausgebildet sein kann. Weiterhin können Steuerinformationen der Computerprogrammprodukte auf einem computerlesbaren Speichermedium gespeichert sein. Die Steuerinformationen des computerlesbaren Speichermediums können derart ausgebildet sein, dass sie bei Verwendung des Datenträgers in einer Recheneinheit ein erfindungsgemäßes Verfahren durchführen. Beispiele für computerlesbaren Speichermedium sind eine DVD, ein Magnetband oder ein USB-Stick, auf welchem elektronisch lesbare Steuerinformationen, insbesondere Software, gespeichert ist. Wenn diese Steuerinformationen von dem Datenträger gelesen und in eine Recheneinheit gespeichert werden, können alle erfindungsgemäßen Ausführungsformen/Aspekte der vorab beschriebenen Verfahren durchgeführt werden. So kann die Erfindung auch von dem besagten computerlesbaren Medium und/oder dem besagten computerlesbaren Speichermedium ausgehen. Die Vorteile der vorgeschlagenen Computerprogrammprodukte bzw. der zugehörigen computerlesbaren Medien entsprechen im Wesentlichen den Vorteilen der vorgeschlagenen Verfahren.

Weitere Besonderheiten und Vorteile der Erfindung werden aus den nachfolgenden Erläuterungen von Ausführungsbeispielen anhand von schematischen Zeichnungen ersichtlich. In diesem Zusammenhang genannte Modifikationen können jeweils miteinander kombiniert werden, um neue Ausführungsformen auszubilden. In unterschiedlichen Figuren werden für gleiche Merkmale die gleichen Bezugszeichen verwendet.

Es zeigen:
Fig. 1 ein schematisches Blockdiagramm eines Systems zur Steuerung einer medizinischen Vorrichtung gemäß einer Ausführungsform;
Fig. 2 ein schematisches Blockdiagramm eines Systems zur Steuerung einer medizinischen Vorrichtung gemäß einer weiteren Ausführungsform;
Fig. 3 ein schematisches Ablaufdiagramm eines Verfahrens zur Steuerung einer medizinischen Vorrichtung gemäß einer Ausführungsform;
Fig. 4 ein schematisches Ablaufdiagramm eines Verfahrens zur Verarbeitung eines Audiosignals gemäß einer Ausführungsform;
Fig. 5 eine schematische Darstellung eines beispielhaften Audiosignals;
Fig. 6 eine schematische Darstellung eines weiteren beispielhaften Audiosignals;
Fig. 7 ein Diagramm einer adaptiven Zeitspanne in Abhängigkeit der bisherigen Dauer der Spracheingabe einer Bedienperson gemäß einer Ausführungsform;
Fig. 8 ein schematisches Ablaufdiagramm eines nicht beanspruchten alternativen Verfahrens zur Verarbeitung eines Audiosignals gemäß einer Ausführungsform; und
Fig. 9 eine schematische Darstellung eines beispielhaften Audiosignals.

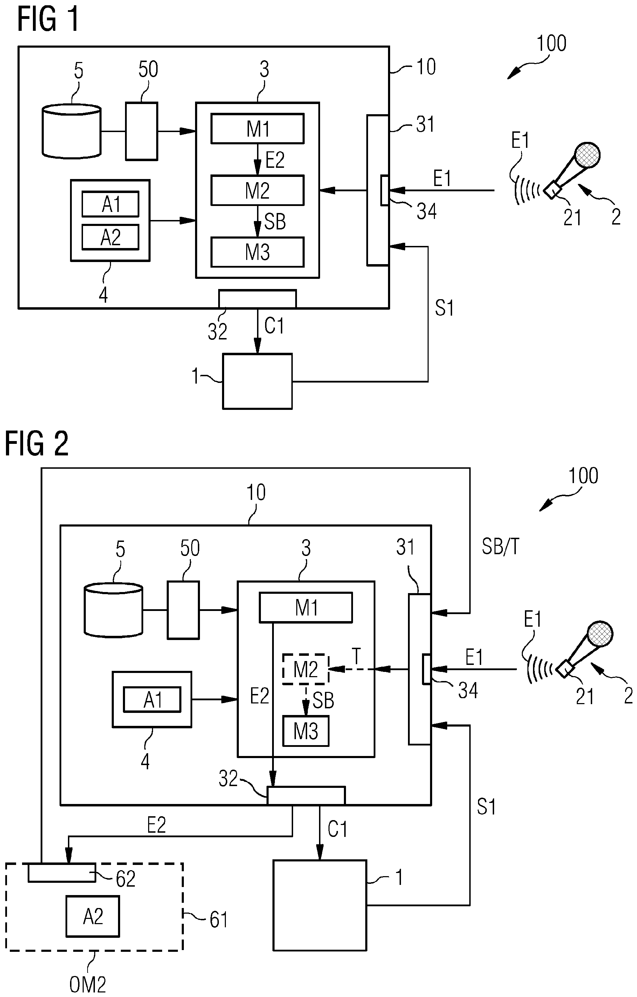

**Figur 1** zeigt schematisch eine funktionale Blockdarstellung eines Systems 100 zur Durchführung einer medizinischen Prozedur an einem Patienten. Das System 100 weist eine medizinische Vorrichtung 1 zur Durchführung einer medizinischen Prozedur an einem Patienten auf. Die medizinische Prozedur kann eine bildgebende und/oder interventionelle und/oder therapeutische Prozedur umfassen.

Insbesondere kann die medizinische Vorrichtung 1 eine bildgebende Modalität umfassen. Die bildgebende Modalität kann allgemein dazu ausgebildet sein, einen anatomischen Bereich eines Patienten abzubilden, wenn dieser in einen Erfassungsbereich der bildgebenden Modalität gebracht wird. Die bildgebende Modalität ist beispielsweise ein Magnetresonanzgerät, ein Einzelphotonenemissionstomographie-Gerät (SPECT-Gerät), ein Positronen-Emissions-Tomographie-Gerät (PET-Gerät), ein Computertomograph, ein Ultraschall-Gerät, ein Röntgengerät oder ein als C-Bogen-Gerät ausgebildetes Röntgengerät. Die bildgebende Modalität kann auch ein kombiniertes medizinisches Bildgebungsgerät sein, welches eine beliebige Kombination aus mehreren der genannten bildgebenden Modalitäten umfasst.

Ferner kann die medizinische Vorrichtung eine Interventions- und/oder Therapievorrichtung aufweisen. Die Interventions- und/oder Therapievorrichtung kann allgemein dazu ausgebildet sein, eine interventionelle und/oder therapeutische medizinische Prozedur an dem Patienten durchzuführen. Beispielsweise kann die Interventions- und/oder Therapievorrichtung eine Biopsievorrichtung zur Entnahme einer Gewebeprobe, eine Strahlen- bzw. Radiotherapievorrichtung zur Bestrahlung eines Patienten, und/oder eine Eingriffsvorrichtung zur Durchführung eines, insbesondere minimalinvasiven, Eingriffs sein. Gemäß Ausführungsformen kann die Interventions- und/oder Therapievorrichtung automatisiert oder wenigstens teil-automatisiert sowie insbesondere robotergesteuert sein. Die Strahlen- bzw. Radiotherapievorrichtung kann beispielsweise einen medizinischen Linearbeschleuniger oder eine andere Strahlenquelle aufweisen. Beispielsweise kann die Eingriffsvorrichtung einen Katheterroboter, minimalinvasiven chirurgischen Roboter, einen Endoskopieroboter usw. aufweisen.

Gemäß weiteren Ausführungsformen kann die medizinische Vorrichtung 1 zusätzlich oder alternativ Module aufweisen, welche die Durchführung einer medizinischen Prozedur unterstützen, wie etwa eine insbesondere wenigstens teil-automatisiert steuerbare Patientenlagerungsvorrichtung und/oder Überwachungsgeräte zur Überwachung eines Zustands des Patienten, wie etwa ein EKG-Gerät, und/oder ein Patientenversorgungsgerät, wie etwa ein Beatmungsgerät, ein Infusionsgerät und/oder ein Dialysegerät.

Ein oder mehrere Komponenten der medizinischen Vorrichtung 1 sollen gemäß Ausführungsformen der Erfindung durch eine Spracheingabe einer Bedienperson ansteuerbar sein. Dazu weist das System 100 eine akustische Eingabevorrichtung 2 und eine Sprachanalysevorrichtung 10 auf.

Die akustische Eingabevorrichtung 2 dient zum Aufnehmen oder Erfassen eines Audiosignals E1, also zum Aufnehmen gesprochener Laute, die von einer Bedienperson des System 100 erzeugt werden. Die Eingabevorrichtung 2 kann beispielsweise als Mikrophon realisiert sein. Die Eingabevorrichtung 2 kann beispielsweise an der medizinische Vorrichtung 1 oder an anderer Stelle, wie in einem Bedienraum, stationär angeordnet sein. Alternativ kann die Eingabevorrichtung 2 auch portabel realisiert sein, z.B. als Mikrophon eines Headsets, das von der Bedienperson mitführbar ist. In diesem Fall weist die Eingabevorrichtung 2 vorteilhaft einen Sender 21 zur drahtlosen Datenübertragung auf.

Die Sprachanalysevorrichtung 10 weist einen Eingang 31 zum Empfang von Signalen und einen Ausgang 32 zum Bereitstellen von Signalen auf. Der Eingang 31 und der Ausgang 32 können eine Schnittstelleneinrichtung der Sprachanalysevorrichtung 10 bilden. Die Sprachanalysevorrichtung 10 ist allgemein zur Durchführung von Datenverarbeitungsprozessen und zur Erzeugung elektrischer Signale eingerichtet. Hierzu kann die Sprachanalysevorrichtung 10 eine Recheneinheit 3 aufweisen. Die Recheneinheit 3 kann z.B. einen Prozessor, z.B. in Form einer CPU oder dergleichen umfassen. Die Recheneinheit 3 kann als eine zentrale Steuereinheit, z.B. als eine Steuereinheit mit einem oder mehreren Prozessoren ausgebildet sein. Insbesondere kann die Recheneinheit 3 als Steuerungsrechner der medizinischen Vorrichtung 1 oder als ein Teil desselben ausgebildet sein. Gemäß weiteren Implementierungen können Funktionalitäten und Komponenten der Recheneinheit 3 in einer dezentralisierten Weise über mehrere Recheneinheiten oder Steuerungen des Systems 100 verteilt sein.

Ferner weist die Sprachanalysevorrichtung 10 einen Datenspeicher 4 auf, und zwar insbesondere einen durch die Recheneinheit 3 lesbaren, nicht-flüchtigen Datenspeicher wie eine Festplatte, eine CD-ROM, eine DVD, eine Blu-Ray Disc, eine Diskette, einen Flash-Speicher oder dergleichen. Auf dem Datenspeicher 4 kann allgemein Software A1, A2 gespeichert sein, die dazu eingerichtet ist, die Recheneinheit 3 zur Durchführung der Schritte eines Verfahrens zu veranlassen.

Wie in Figur 1 schematisch dargestellt ist, ist der Eingang 31 der Sprachanalysevorrichtung 10 mit der Eingabevorrichtung 2 und mit der medizinische Vorrichtung 1 verbunden. Der Eingang 31 kann zur drahtlosen oder zur drahtgebundenen Datenkommunikation eingerichtet sein. Beispielsweise kann der Eingang 31 einen Bus-Anschluss aufweisen. Alternativ oder zusätzlich zu einem drahtgebundenen Anschluss kann der Eingang 31 auch eine Schnittstelle, z.B. einen Empfänger 34, zur drahtlosen Datenübertragung aufweisen. Beispielsweise kann, wie in Figur 1 dargestellt, der Empfänger 34 mit dem Sender 21 der Eingabevorrichtung 2 in Datenkommunikation stehen. Als Empfänger 34 kann beispielsweise eine WIFI Schnittstelle, eine Bluetooth-Schnittstelle oder dergleichen vorgesehen sein.

Der Ausgang 32 der Sprachanalysevorrichtung 10 ist mit der medizinische Vorrichtung 1 verbunden. Der Ausgang 32 kann zur drahtlosen oder zur drahtgebundenen Datenkommunikation eingerichtet sein. Beispielsweise kann der Ausgang 32 einen Bus-Anschluss aufweisen. Alternativ oder zusätzlich zu einem drahtgebundenen Anschluss kann der Ausgang 32 auch eine Schnittstelle zur drahtlosen Datenübertragung aufweisen, beispielsweise eine WIFI Schnittstelle, eine Bluetooth-Schnittstelle oder dergleichen.

Die Sprachanalysevorrichtung 10 ist dazu eingerichtet, ein oder mehrere Steuersignale C1 zur Steuerung der medizinischen Vorrichtung 1 zu erzeugen und an dem Ausgang 32 bereitzustellen. Das Steuersignal C1 veranlasst die medizinische Vorrichtung 1 zur Durchführung eines bestimmten Arbeitsschritts oder einer Sequenz von Schritten. Am Beispiel einer als MR-Gerät ausgeführten bildgebenden Modalität können sich solche Schritte beispielsweise auf die Durchführung einer bestimmten Scansequenz mit einer bestimmten Anregung von Magnetfeldern durch einen Erzeugerkreis des MR-Geräts beziehen. Ferner können sich solche Schritte auf ein Verfahren von verfahrbaren Systemkomponenten der medizinischen Vorrichtung 1 beziehen, wie etwa dem Verfahren einer Patientenlagerungsvorrichtung oder dem Verfahren von Emissions- oder Detektor-Komponenten einer bildgebenden Modalität.

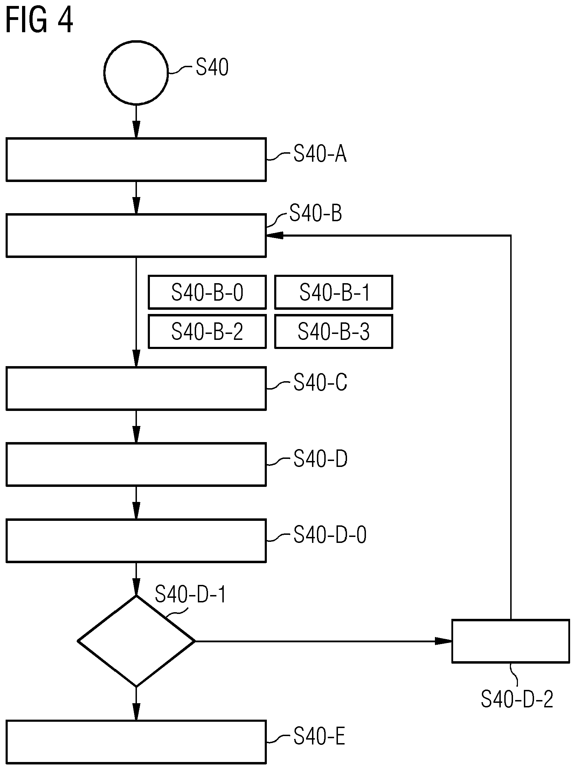

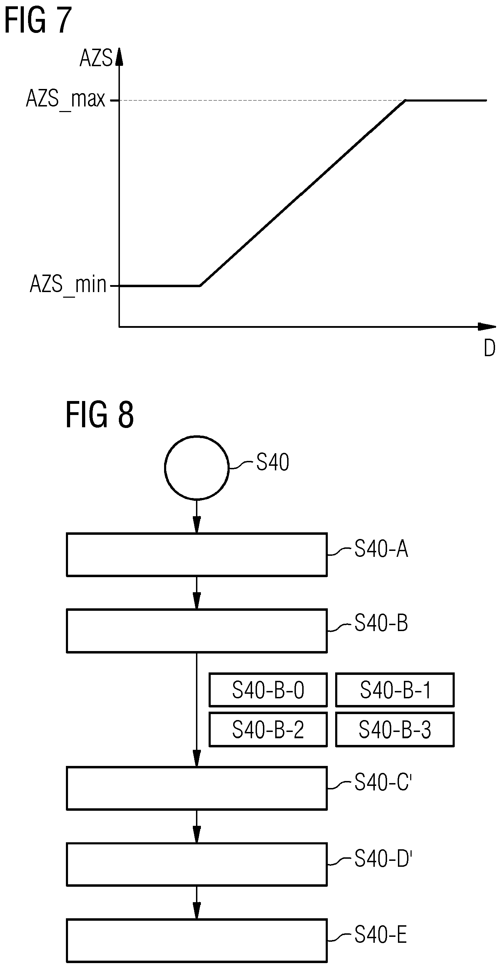

Zur Bereitstellung der ein oder mehreren Steuersignale C1 kann die Recheneinheit 3 verschiedene Module M1-M3 aufweisen. Ein erstes Modul M1, das im Folgenden als Sprachanalysemodul M1 bezeichnet wird, ist dazu ausgebildet, aus dem Audiosignal E1 einen Sprachdatenstrom E2 zu bestimmen (zu errechnen), der die relevanten Sprachbefehle der Bedienperson enthält. Insbesondere ist das Sprachanalysemodul M1 dazu ausgebildet, mittels fortlaufender Analyse des Audiosignals E1 einen Anfang BE und ein Ende EN einer zur Steuerung der medizinischen Vorrichtung 1 relevanten gesprochenen Äußerung (Spracheingabe) innerhalb des Audiosignals E1 festzulegen und basierend auf dem Audiosignal E1 zwischen dem Anfang BE und dem Ende EN den Sprachdatenstrom E2 bereitzustellen. Hierfür kann das Sprachanalysemodul M1 dazu ausgebildet sein, eine adaptive Zeitspanne AZS anhand der durch das Sprachanalysemodul M1 durchgeführten Sprachanalyse dynamisch festzulegen. Hierfür kann das Sprachanalysemodul M1 dazu ausgebildet sein, einen Sprachanalysealgorithmus A1 (erster Computerlinguistik-Algorithmus) auf das Audiosignal E1 anzuwenden. Insbesondere kann das Sprachanalysemodul M1 (z.B. durch Ausführen des Sprachanalysealgorithmus A1) dazu ausgebildet sein, die Verfahrensschritte S40-A bis S40-E auszuführen (vgl. Figuren 4 und 8).

Der Sprachdatenstrom E2 kann anschließend in ein weiteres Modul M2 der Recheneinheit 3 eingegeben werden, das nachfolgend auch als Spracherkennungsmodul M2 bezeichnet wird. Das Spracherkennungsmodul M2 ist dazu ausgebildet, basierend auf dem Sprachdatenstrom E2 ein oder mehrere Sprachbefehle SB zu identifizieren. Dazu kann das Spracherkennungsmodul M2 einen Spracherkennungsalgorithmus A2 (zweiter Computerlinguistik-Algorithmus) auf den Sprachdatenstrom E2 anwenden, welcher Spracherkennungsalgorithmus A2 dazu ausgebildet ist, in solchen Sprachdatenströmen ein oder mehrere Sprachbefehle zu erkennen. Insbesondere kann das Spracherkennungsmodul M2 (z.B. durch Ausführen des Spracherkennungsalgorithmus A2) dazu ausgebildet sein, den Verfahrensschritt S50 auszuführen. Das Spracherkennungsmodul M2 analysiert das bereitgestellte Signal bevorzugt nicht fortlaufend (also quasi in Echtzeit), sondern geschlossen als Ganzes. Dies hat den Vorteil eines genaueren Analyseergebnisses. Insbesondere können so Worteinbettungen systematischer erfasst werden (und nicht nur rückgerichtet ausgehend von einem aktuellen Wort).

Die Sprachbefehle SB werden in ein weiteres Modul M3 eingegeben, welches im Weiteren auch als Befehlsausgabemodul M3 bezeichnet wird. Das Befehlsausgabemodul M3 ist dazu ausgebildet, basierend auf den Sprachbefehlen SB ein oder mehrere Steuersignale C1 bereitzustellen, die dazu geeignet sind, die medizinische Vorrichtung 1 entsprechend den identifizierten Sprachbefehlen SB zu steuern.

Die vorgenommene Unterteilung in Module M1-M3 dient dabei lediglich der einfacheren Erklärung der Funktionsweise der Recheneinheit 3 und ist nicht beschränkend zu verstehen. Die Module M1-M3 bzw. deren Funktionen können auch in einem Element zusammengefasst sein. Die Module M1-M3 können dabei insbesondere auch als Computerprogrammprodukte oder Computerprogrammsegmente aufgefasst werden, welche bei der Ausführung in der Recheneinheit 3 ein oder mehrere der nachstehend beschriebenen Funktionen oder Verfahrensschritte realisieren.

**Figur 2** zeigt schematisch eine funktionale Blockdarstellung eines Systems 100 zur Durchführung einer medizinischen Prozedur an einem Patienten gemäß einer weiteren Ausführungsform. Die in Figur 2 gezeigte Ausführungsform unterscheidet sich von der in Figur 1 gezeigten Ausführungsform darin, dass die Funktionalitäten des Spracherkennungsmoduls M2 zumindest teilweise in ein Online-Spracherkennungsmodul OM2 ausgelagert sind. Ansonsten bezeichnen gleiche Bezugszeichen gleiche oder funktionsgleiche Komponenten.

Das Online-Spracherkennungsmodul OM2 kann auf einem Server 61 abgelegt sein, mit dem die Sprachanalysevorrichtung 10 über eine Internetverbindung und eine Schnittstelle 62 des Servers 61 in Datenaustausch treten kann. Die Sprachanalysevorrichtung 10 kann entsprechend dazu ausgebildet sein, dem Online-Spracherkennungsmodul OM2 den Sprachdatenstrom E2 zu übermitteln. Das Online-Spracherkennungsmodul OM2 kann dazu ausgebildet sein, basierend auf dem Sprachdatenstrom E2 direkt ein oder mehrere Sprachbefehle SB zu identifizieren und der Sprachanalysevorrichtung 10 zurückzugeben. Entsprechend kann das Online-Spracherkennungsmodul OM2 dazu ausgebildet sein, den Spracherkennungsalgorithmus A2 in einem geeigneten Online-Speicher verfügbar zu machen. Das Online-Spracherkennungsmodul OM2 kann dabei als zentralisierte Einrichtung aufgefasst werden, welche Spracherkennungsdienste für mehrere, insbesondere lokale Clients bereitstellt (die Sprachanalysevorrichtung 10 kann in diesem Sinne als lokaler Client aufgefasst werden). Die Verwendung eines zentralen Online-Spracherkennungsmoduls OM2 kann dahingehend vorteilhaft sein, dass leistungsfähigere Algorithmen angewandt und mehr Rechenleistung aufgebracht werden können.

In alternativen Implementierungen kann das Online-Spracherkennungsmodul OM2 auch "lediglich" ein Transkript T des Sprachdatenstroms E2 zurückgeben. Das Transkript T kann dann maschinen-verwertbaren Text enthalten, in den der Sprachdatenstrom umgewandelt wurde. Auf Grundlage dieses Transkripts T kann dann beispielsweise das Modul M2 der Recheneinheit 3 die Sprachbefehle SB identifizieren. Eine solche Ausgestaltung kann dann von Vorteil sein, wenn die Sprachbefehle SB von den Gegebenheiten der medizinischen Vorrichtung 1 abhängen, auf die das Online-Spracherkennungsmodul OM2 keinen Zugriff hat und/oder für deren Berücksichtigung das Online-Spracherkennungsmodul OM2 nicht vorbereitet wurde. Man bedient sich dann der Leistungsfähigkeit des Online-Spracherkennungsmoduls OM2 zur Erstellung des Transkripts T, bestimmt die Sprachbefehle aber ansonsten innerhalb der Sprachanalysevorrichtung 10.

Gemäß einer weiteren, nicht gezeigten Abwandlung können umgekehrt aber auch weitere Funktionen der Sprachanalysevorrichtung 10 in einem zentralen Server ausgeführt werden. So ist denkbar, auch den Sprachanalysealgorithmus A1 in dem Online-Spracherkennungsmodul OM2 zu hosten. Dem Online-Spracherkennungsmodul OM2 würde dann das Audiosignal E1 bereitgestellt werden, dessen weitere Verarbeitung dann im Online-Spracherkennungsmodul OM2 stattfände. Zurückgegeben würde dann das Transkript T oder gleich die Sprachbefehle SB.

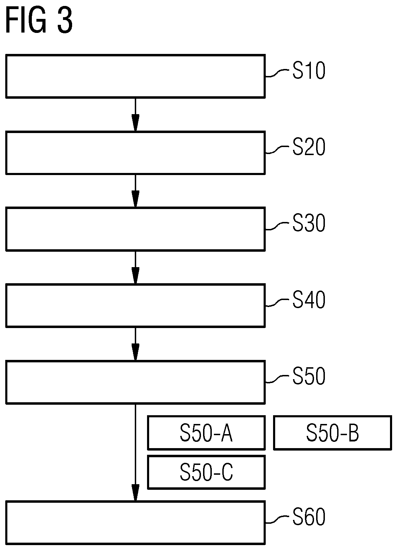

Eine Steuerung der medizinischen Vorrichtung 1 kann in den in Figuren 1 und 2 beispielhaft dargestellten Systemen 100 durch ein Verfahren erfolgen, welches in **Figur 3** beispielhaft als Flussdiagramm dargestellt ist. Die Reihenfolge der Verfahrensschritte ist weder durch die dargestellte Abfolge noch durch die gewählte Nummerierung beschränkt. So kann die Reihenfolge der Schritte ggf. vertauscht und einzelne Schritte können weggelassen werden.

Allgemein ist hierbei vorgesehen, dass die Bedienperson, welche die medizinische Vorrichtung 1 bedient, ein Kommando stimmlich bzw. sprachlich äußert, z.B. indem sie einen Satz wie "Starte Scansequenz X" oder "bringe Patient in Ausgangsposition" spricht, die Eingabevorrichtung 2 ein zugehöriges Audiosignal E1 erfasst und verarbeitet, und die Sprachanalysevorrichtung 10 das erfasste Audiosignal E1 analysiert und ein entsprechendes Steuerkommando C1 zur Betätigung der medizinischen Vorrichtung 1 erzeugt. Ein Vorteil dieses Vorgehens ist, dass die Bedienperson während des Sprechens auch andere Aufgaben erledigen kann, z.B. sich mit der Vorbereitung des Patienten befassen. Dies beschleunigt vorteilhaft die Arbeitsabläufe. Ferner kann die medizinische Vorrichtung 1 dadurch zumindest teilweise "berührungslos" gesteuert werden, wodurch die Hygiene an der medizinische Vorrichtung 1 verbessert wird.

In Schritt S10, erfolgt zunächst ein Erfassen des Audiosignals E1 mittels der Eingabevorrichtung 2. Das Audiosignal E1 wird der Sprachanalysevorrichtung 10 am Eingang 31 bereitgestellt bzw. die Sprachanalysevorrichtung 10 empfängt das Audiosignal E1 über den Eingang 31 (Schritt S20).

In einem optionalen Schritt S30 kann ein Ermitteln eines aktuellen Systemzustands S1 der medizinischen Vorrichtung 1 erfolgen. Der Systemzustand S1 der medizinischen Vorrichtung 1 kann beispielsweise durch einen Standby-Betrieb der medizinischen Vorrichtung 1 gegeben sein, oder dadurch, dass die medizinische Vorrichtung 1 gerade eine Operation (etwa eine Scansequenz oder ein Verfahren einer Systemkomponente) durchführt oder sich in einem Vorbereitungszustand zur Durchführung einer vorbestimmten Operation befindet. Allgemein ist der Systemzustand S1 durch einen jeweiligen Arbeitsschritt oder eine Abfolge bzw. Sequenz von Arbeitsschritten festgelegt, welche die medizinischen Vorrichtung 1 gerade ausführt oder ausführen soll. Daraus ergibt sich, welche weiteren Arbeitsschritte die medizinischen Vorrichtung 1 potenziell durchführen könnte und damit, wie sie betätigbar ist und wie zeitkritisch eine Betätigung ist. Beispielsweise kann der Systemzustand S1 als Eingangsgröße einem Look-up-Table zugeführt werden, in welchem die für verschiedene Systemzustände notwendigen Informationen für die Ansteuerung der medizinischen Vorrichtung 1 enthalten sind. Dieser Systemzustand S1 stellt die medizinische Vorrichtung 1 am Eingang 31 der Sprachanalysevorrichtung 10 bereit, z.B. als Datensignal.

In Schritt S40 erzeugt die Sprachanalysevorrichtung 10 aus dem erfassten Audiosignal E1 einen Sprachdatenstrom E2. Schritt S40 umfasst also mit anderen Worten ein Extrahieren einer für die Steuerung der medizinischen Vorrichtung 1 relevanten sprachlichen Äußerung als Sprachdatenstrom E2 aus dem gesamten Audiosignal E1. Insbesondere umfasst das Erzeugen des Sprachdatenstroms E2 verschiedene Teilschritte, in welchen ein Anfang BE und ein Ende EN einer zur Steuerung der medizinischen Vorrichtung 1 relevanten gesprochenen Äußerung (bzw. Spracheingabe) innerhalb des Audiosignals E1 detektiert bzw. festgelegt werden. Optional kann dabei der Systemzustand S1 berücksichtigt werden. Dies kann beispielsweise durch eine Software A1 realisiert werden, die auf dem Datenspeicher 4 abgelegt ist und die Recheneinheit 3 zur Durchführung dieser Schritte veranlasst. Alternativ kann eine entsprechende Software im optionalen Online-Spracherkennungsmodul OM2 abgelegt sein, die das optionales Online-Spracherkennungsmodul OM2 entsprechend zur Durchführung dieser Schritte veranlasst. Verschiedene Ausgestaltungen der Schritte zu Erzeugung des Sprachdatenstroms E2 aus dem Audiosignal E1 werden weiter unten in Bezugnahme auf Figuren 4 bis 6 näher beschrieben. Optional kann in Schritt S40 zudem der Einsatz eines Analog-Digital-Wandler (nicht dargestellt) vorgesehen sein, der das analoge Audiosignal E1 digitalisiert. Weiter optional kann der Sprachdatenstrom E2 in Schritt S40 z.B. zur weiteren Verarbeitung aufgezeichnet werden.

In Schritt S50 werden ein oder mehrere Sprachbefehle SB der Bedienperson aus dem Sprachdatenstrom E2 (oder dem Transkript T) ermittelt. Dazu kann der Spracherkennungsalgorithmus A2 auf den Sprachdatenstrom E2 angewendet werden. Der Spracherkennungsalgorithmus A2 kann beispielsweise dazu ausgebildet sein, zu erkennen, ob in dem Sprachdatenstrom E2 (oder dem Transkript T) eine oder mehrere für die Steuerung der medizinischen Vorrichtung 1 relevante Sprachbefehle SB enthalten sind. Der Spracherkennungsalgorithmus A2 kann beispielsweise als Software auf dem Datenspeicher 4 enthalten sein. In alternativen Ausführungsformen kann der Spracherkennungsalgorithmus A1 auch im Online-Spracherkennungsmodul OM2 hinterlegt sein.

Dazu kann der Spracherkennungsalgorithmus A2 beispielsweise dazu ausgebildet sein, zu ermitteln, ob dem Sprachdatenstrom E2 (oder dem Transkript T) ein oder mehrere in einer Befehlsbibliothek 50 der medizinischen Vorrichtung 1 enthaltene Sprachbefehle zuordenbar sind. Dies kann Regel-basiert anhand der Signaleigenschaften des Sprachdatenstroms E2 erfolgen. Die Befehlsbibliothek 50 kann eine Auswahl an Sprachbefehlen SB enthalten, denen jeweils eine oder mehrere Signalteile des Sprachdatenstrom E2 der Bedienperson zuordenbar sind. Ein Signalteil kann dabei eine sprachliche Äußerung der Bedienperson bestehend aus ein oder mehreren Wörtern sein. Gemäß einigen Implementierungen kann die Befehlsbibliothek 50 ferner eine Auswahl an Sprachbefehlen für die medizinische Vorrichtung 1 enthalten, die in Abhängigkeit des aktuellen Systemzustands S1 der medizinischen Vorrichtung 1 aus einer Befehlsdatenbank 5 geladen wird. Die Befehlsbibliothek 50 wird dann temporär für einen jeweiligen Systemzustand S1 generiert und kann beispielsweise als temporäre Datei in einen Arbeitsspeicher der Recheneinheit 3 geladen werden. Der Inhalt der Befehlsbibliothek 50, also die einzelnen Datensätze, in denen jeweils ein Sprachbefehl mit einer oder mehreren Signalmustern bzw. sprachlichen Äußerungen verknüpft ist, wird aus der Befehlsdatenbank 5 geladen. Welche Datensätze aus der Befehlsdatenbank 5 in die Befehlsbibliothek 50 geladen werden, hängt vom Systemzustand S1 der medizinischen Vorrichtung 1 ab. Beispielsweise kann die medizinische Vorrichtung 1 bei der Durchführung einer bestimmten Operation lediglich bestimmte andere oder weitere Arbeitsschritte ausführen. Diese Information kann in der Befehlsdatenbank 5 zusammen mit einem Sprachbefehl SB, welcher die Erzeugung eines dem Arbeitsschritt entsprechenden Steuerkommandos C1 bewirkt, hinterlegt sein.

Gemäß einigen Implementierungen kann der Spracherkennungsalgorithmus A2 eine durch maschinelles Lernen trainierte Erkennungsfunktion als Software aufweisen. Die Erkennungsfunktion kann dazu ausgebildet sein, ein oder mehrere sprachliche Äußerungen in dem Sprachdatenstrom E2 zu erkennen und ein entsprechendes Erkennungssignal (z.B. in Form des Transkripts T) beispielsweise über den Eingang 31 der Sprachanalysevorrichtung 10 zuzuführen. Die so ermittelten sprachlichen Äußerungen können dann in der Sprachanalysevorrichtung 10 in Sprachbefehle SB umgesetzt werden, z.B. unter Verwendung der weiter oben erläuterten Befehlsbibliothek.

Ist die Spracherkennungsfunktion A2 in dem Online-Spracherkennungsmodul OM2 gehostet, kann Schritt S50 ferner einen oder mehrere der folgenden Teilschritte umfassen: einen optionalen Teilschritt S50-A des Übermittelns, durch die Sprachanalysevorrichtung 10 des Sprachdatenstroms E2 an das Online-Spracherkennungsmodul OM2, einen optionalen Teilschritt S50-B des Berechnens eines Transkripts T des Sprachdatenstroms E2 (d.h., des Umwandelns des Sprachdatenstroms E2 in Text), einen optionalen Teilschritt S50-C des Empfangens des Transkripts T durch die Sprachanalysevorrichtung 10 von dem Online-Spracherkennungsmodul OM2, sowie einen optionalen Teilschritt S50-D des Identifizierens eines oder mehrerer Sprachbefehle SB basierend auf dem empfangenen Transkript T.

Gemäß weiteren Ausführungsformen kann auf Schritt S50 auch verzichtet werden, bzw. die Funktionalität des Schritts S50 kann in Schritt S40 integriert sein. Mit anderen Worten kann das Ergebnis von Schritt S40 direkt für die weitere Verarbeitung verwendete werden. Zum Beispiel können Sprachbefehle auch unmittelbar in Schritt S40 abgeleitet werden. Entsprechend kann auch der Sprachanalysealgorithmus A1 beispielsweise dazu ausgebildet sein, zu erkennen, ob in dem Sprachdatenstrom E2 (oder dem Transkript T) eine oder mehrere für die Steuerung der medizinischen Vorrichtung 1 relevante Sprachbefehle SB enthalten sind.

In Schritt S60 werden basierend auf den in Schritt S50 erkannten Sprachbefehlen SB ein oder mehrere Steuersignale C1 für die medizinische Vorrichtung 1 bestimmt. Dazu können die erkannten Sprachbefehle SB beispielsweise in Form einer Eingangsvariable einem Befehlsausgabemodul M3 (oder einer entsprechenden Software, die beispielsweise auf dem Datenspeicher 4 abgelegt ist) zugeführt werden, welche die Recheneinheit 3 dann zum Erzeugen eines oder mehrerer Steuersignale C1 veranlasst. Die Steuersignale C1 sind zur Steuerung der medizinischen Vorrichtung 1 gemäß dem oder den Sprachbefehlen SB geeignet. In Schritt S70 erfolgt schließlich die Übermittlung der Steuersignale C1 an die medizinischen Vorrichtung 1 (zur Steuerung derselben).

**Figur 4** zeigt ein Ablaufdiagramm einer Ausführungsform eines Verfahrens zur Verarbeitung eines Audiosignals E1 und insbesondere zur Bestimmung eines Sprachdatenstroms E2 aus dem Audiosignal E1. Die Reihenfolge der Verfahrensschritte ist weder durch die dargestellte Abfolge noch durch die gewählte Nummerierung beschränkt. So kann die Reihenfolge der Schritte ggf. vertauscht und einzelne Schritte können weggelassen werden. Die in Figur 4 dargestellten Schritte können insbesondere im Rahmen von Schritt S40 aus Figur 3 ausgeführt werden.

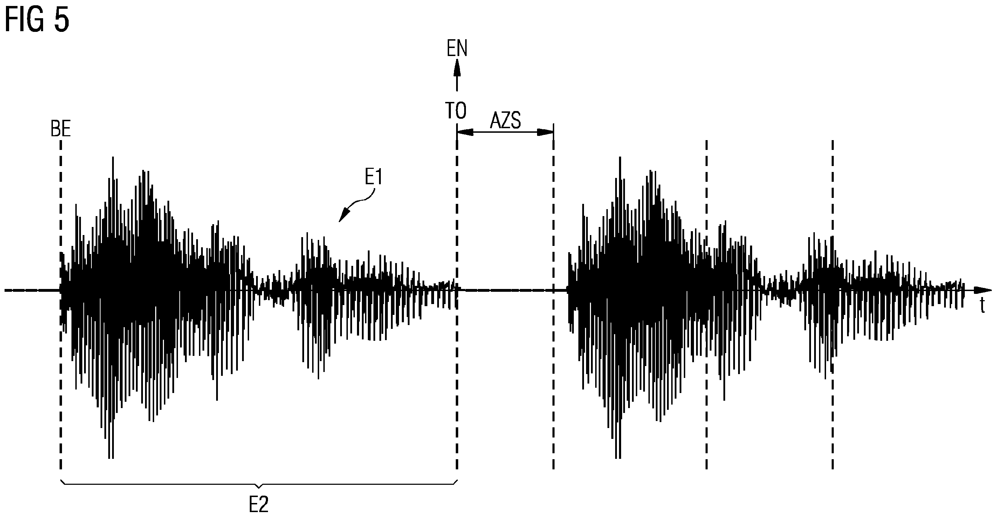

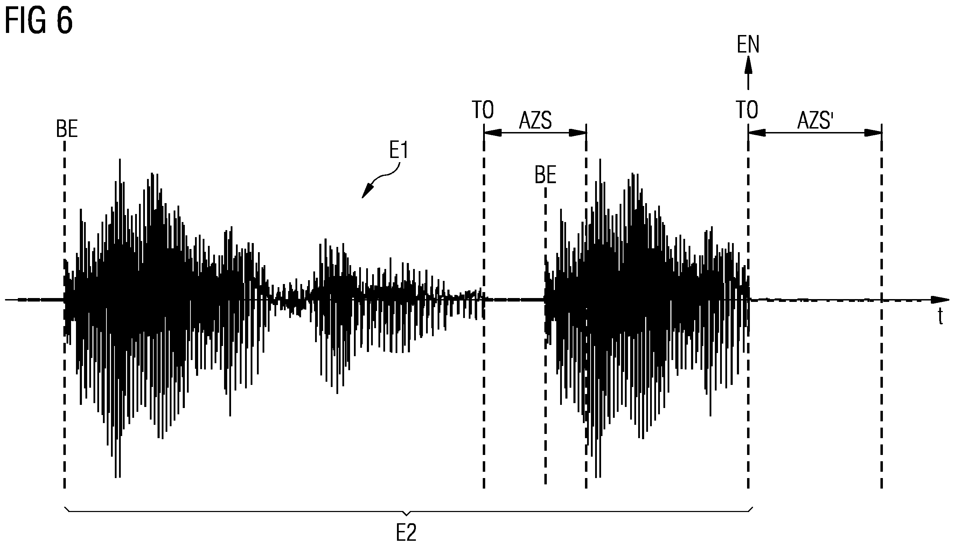

Die in Figur 4 gezeigten Verfahrensschritte zielen darauf ab, dynamisch zu erkennen, wann eine Spracheingabe der Bedienerperson abgeschlossen ist und mit der umfassenden Analyse der Spracheingabe begonnen werden kann (z.B. im Rahmen von Schritt S50). Je nach auszuführendem Befehl kann die Spracheingabe kürzer oder länger sein. Mit anderen Worten bilden die Verfahrensschritte in Figur 4 einen Entscheidungsprozess ab, wann das System 100 aufhört, auf eine sprechende Bedienperson zu hören, und beginnt, die Spracheingabe auszuwerten und ggf. in Steuersignale C1 umzusetzen. So wird aus dem Audiosignal E1 ein Sprachdatenstrom E2 von je nach Spracheingabe dynamisch variierender zeitlicher Länge erzeugt, der dann der weiteren Analyse in Schritt S50 zugeführt wird. Dabei beruht die in Figur 4 gezeigte Verarbeitung auf dem Setzen einer adaptiven Zeitspanne, die als variabler "Timeout" verwendet wird, nach dessen Ablauf eine Spracheingabe als beendet angesehen wird sofern während des Ablaufens keine neuerliche Spracheingabe der Bedienperson erfasst wird. In den **Figuren 5** **und** **6** ist ein Audiosignal E1 und ein daraus bereitgestellter Sprachdatenstrom E2 schematisch dargestellt.

In einem ersten Schritt S40-A wird in dem Audiosignal E1 ein Beginn BE einer Spracheingabe der Bedienperson erkannt. Dies kann beispielsweise anhand des Audiosignals E1 erfolgen, indem z.B. für natürliche Sprache charakteristische Signalanteile erfasst werden. Alternativ kann der Beginn BE der Spracheingabe dadurch erfasst werden, dass die im Audiosignal E1 enthaltene Schallinformation in eine Textinformation (d.h. ein Transkript T) umgewandelt wird und der Beginn der Spracheingabe anhand des Transkripts T bestimmt wird. Diese Funktionalität kann durch ein entsprechendes Softwaremodul ausgeführt werden, das auf dem Datenspeicher 4 abgelegt ist und die Recheneinheit 3 zur Durchführung dieses Schritts veranlasst. Das Softwaremodul kann z.B. Teil des Sprachanalysealgorithmus A1 oder des Spracherkennungsalgorithmus A2 sein. Alternativ kann ein von dem Online-Spracherkennungsmodul OM2 bereitgestelltes Transkript T verwendet werden.

In Schritt S40-B erfolgt eine fortlaufende und im Wesentlichen in Echtzeit stattfindende Analyse des Audiosignals E1 durch den Sprachanalysealgorithmus A1. Dadurch stellt der Sprachanalysealgorithmus A1 ein Sprachanalyseergebnis bereit, auf dessen Grundlage ermittelt werden kann, ob die Spracheingabe der Bedienperson beendet ist und mit der weiteren Analyse der Spracheingabe der Bedienperson insbesondere durch den Spracherkennungsalgorithmus A2 begonnen werden kann.

Dazu wird in Schritt S40-C basierend auf dem Sprachanalyseergebnis eine adaptive Zeitspanne AZS bestimmt. In dieser Ausführungsform dient diese adaptive Zeitspanne als Timeout. Wird durch die Aktivitätserkennung ab einem gewissen Zeitpunkt T0 keine menschliche Stimme im Audiosignal E1 mehr festgestellt, wird ausgehend von diesem Zeitpunkt T0 das Verstreichen der adaptiven Zeitspanne AZS abgewartet (vgl. Figuren 5 und 6). Wird während des Verstreichens der adaptiven Zeitspanne AZS kein neuerlicher Beginn einer Spracheingabe festgestellt, wird die Spracheingabe als beendet angesehen und der Sprachdatenstrom E2 wird auf Grundlage der bisherigen Spracheingabe gebildet (vgl. Figur 5). Wird hingegen ein neuerlicher Beginn einer Spracheingabe innerhalb der adaptiven Zeitspanne AZS erkannt, wird die Spracheingabe nicht als beendet angesehen und die neuerliche Spracheingabe wird dem Sprachdatenstrom E2 zugerechnet (vgl. Figur 6). Gleichzeitig wird die fortlaufende Analyse der Spracheingabe fortgesetzt und die adaptive Zeitspanne AZS wird fortlaufend angepasst. Am Beispiel von Figur 6 kann dies zu einer veränderten, in diesem Beispielsfall längeren adaptiven Zeitspanne AZS' führen. Im Folgenden wird in diesem Zusammenhang erklärt, wie die adaptive Zeitspanne AZS angepasst werden kann.

Im einfachen Fall kann das Sprachanalyseergebnis eine bisherige Dauer D der Spracheingabe der Bedienperson ab dem erkannten Anfang BE der Spracheingabe umfassen. Ob eine Spracheingabe noch andauert kann z.B. wie bei dem Erfassen des Beginns BE der Spracheingabe anhand des Audiosignals E1 selbst erkannt werden. Entsprechend kann Schritt S40-B einen optionalen Schritt S40-B-0 des Erfassens der bisherigen Dauer D der Spracheingabe (z.B. basierend auf einer aus dem Audiosignal extrahierten Texteingabe) umfassen. Je länger die Spracheingabe bereits andauert, desto länger kann in Schritt S40-C die adaptive Zeitspanne AZS gesetzt werden.

Der Hintergrund ist, dass bei tendenziell längeren Spracheingaben häufig komplexere Sachverhalte vermittelt werden, die eine längere Wartedauer rechtfertigen, bis mit der weiteren Analyse begonnen werden kann. Zudem ist es bei bereits länger andauernden Spracheingaben möglich, dass die Bedienperson Denkpausen einlegt. Generell kann vorgesehen sein, die adaptive Zeitspanne AZS nur zwischen einer minimalen ASZ_min und maximalen Zeitspanne ASZ_max zu variieren, um einerseits eine Mindest-Zuhördauer zu garantieren und anderseits nicht zu lange auf eine weitere Eingabe der Bedienperson zu warten. Übertragen auf eine Anpassung der adaptiven Zeitspanne AZS in Abhängigkeit der bisherigen Dauer D kann das z.B. bedeuten, dass die adaptive Zeitspanne AZS zwischen einer minimalen Zeitspanne ASZ_min und einer maximalen Zeitspanne ASZ_max mit der bisherigen Dauer D - also wenigsten in einem Teilbereich der bisherigen Dauern D - ansteigt (vgl. **Figur 7**). Der Anstieg kann dabei im Wesentlichen linear erfolgen.

Gemäß weiteren Implementierungen kann der Spracherkennungsalgorithmus A1 auch ein Sprachverständnismodul aufweisen, das zum Verständnis natürlicher Sprache ausgebildet ist (ein englischer Ausdruck hierfür ist natural language understanding).

Das Sprachverständnismodul kann dabei dazu ausgebildet sein, zunächst die im Audiosignal E1 enthaltene Schallinformation in Textinformation umzuwandeln (d.h. ein Transkript T zu erzeugen). Das Sprachverständnismodul kann ferner insbesondere dazu ausgebildet sein, eine Tokenisierung des Audiosignals E1 bzw. der Spracheingabe der Bedienperson bzw. des Transkripts T vorzunehmen. Tokenisierung bezeichnet dabei die Segmentierung der Spracheingabe, d.h. den gesprochenen Text in Einheiten der Wort- bzw. Satzebene. Entsprechend kann das Sprachanalyseergebnis eine Tokenisierungsinformation umfassen, welche beispielsweise angibt, ob die Bedienperson einen momentanen Satz zu Ende gesprochen hat oder nicht.

Entsprechend kann der Schritt S40-B einen optionalen Schritt S40-B-1 des Umwandelns einer im Audiosignal E1 enthaltenen Schallinformation in eine Textinformation (bzw. des Erzeugens eines Transkripts T) umfassen. Ferner kann der Schritt S40-B einen optionalen Schritt S40-B-2 des Tokenisierens der Spracheingabe bzw. des Audiosignals E1 bzw. des Transkripts T zur Bereitstellung der Tokenisierungsinformation umfassen.

Die Tokenisierungsinformation kann in Schritt S40-C verwendet werden, um die adaptive Zeitspanne AZS situativ geeignet anzupassen. Wenn die Bedienperson z.B. einen Satz noch nicht zu Ende gesprochen hat, kann die adaptive Zeitspanne AZS verlängert werden, um der Bedienperson ausreichend Zeit zu geben, die Spracheingabe zu beenden. Umgekehrt kann die adaptive Zeitspanne AZS verkürzt werden, wenn die Bedienperson einen Satz zu Ende gesprochen hat.

Gemäß weiteren Implementierungen kann das Sprachverständnismodul zusätzlich oder alternativ dazu ausgebildet sein, eine semantische Analyse des Audiosignals E1 bzw. der Spracheingabe der Bedienperson bzw. des Transkripts T auszuführen. Entsprechend kann das Sprachanalyseergebnis eine semantische Information der Spracheingabe der Bedienperson umfassen. Die semantische Analyse ist dabei darauf gerichtet, der Spracheingabe eine Bedeutung zuzuordnen. Dazu kann beispielsweise ein Abgleich mit der oben erwähnten Befehlsdatenbank 5 bzw. Befehlsbibliothek 50 der medizinischen Vorrichtung 1 erfolgen. Insbesondere kann das Sprachverständnismodul ermitteln, ob dem Transkript T ein oder mehrere in einer Befehlsbibliothek 50 der medizinischen Vorrichtung 1 enthaltene Sprachbefehle SB zuordenbar sind. Ist dies der Fall, kann eine auf den Sprachbefehl SB gerichtete Nutzerintention erkannt werden. Alternativ kann zur semantischen Analyse ein Abgleich mit einer von der medizinischen Vorrichtung 1 unabhängigen Bibliothek erfolgen, in der z.B. allgemeine Schlüsselwörter verzeichnet sind, die eine bestimmte Nutzerintention anzeigen (wie z.B. "Stopp", "Start", etc).

Entsprechend kann Schritt S40-B einen optionalen Schritt S40-B-3 der semantischen Analyse der Spracheingabe bzw. des Transkripts T zur Bereitstellung der semantischen Information umfassen.

Insbesondere kann die semantische Information ein oder mehrere in dem Audiosignal E1 bzw. dem Transkript T erkannte Nutzerintentionen umfassen. Sofern ein oder mehrere Nutzerintentionen erkannt wurden, kann die semantische Information ferner jeweils ein oder mehrere Eigenschaften dieser Nutzerintention umfassen. Solche Eigenschaften können z.B. angeben, wie komplex eine Nutzerintention ist. Dies kann z.B. durch die Komplexität eines zugehörigen Steuerbefehls SB für die medizinische Vorrichtung 1 bestimmt werden. Ferner kann eine Eigenschaft einer Nutzerintention angeben, ob diese oder der zugehörige Sprachbefehl SB vollständig ist, oder wie dringlich die Nutzerintention bzw. der Sprachbefehl SB ist.

In Schritt S40-C kann die semantische Analyse verwendet werden, um die adaptive Zeitspanne AZS geeignet anzupassen. Konnte z.B. keine Nutzerintention festgestellt werden, kann die adaptive Zeitspanne AZS verlängert werden, um eine Nutzerintention abzuwarten. Ebenso kann die adaptive Zeitspanne AZS verlängert werden, wenn die Nutzerintention unvollständig ist oder zu einem komplexen Sprachbefehl SB gehört. Umgekehrt kann die adaptive Zeitspanne AZS verkürzt werden, wenn die Nutzerintention einen dringenden, schnell auszuführenden Sprachbefehl SB anzeigt.

Gemäß weiteren Implementierungen kann in Schritt S40-C ferner der Systemzustand S1 der medizinischen Vorrichtung 1 berücksichtigt werden. Der Systemzustand S1 kann z.B. anzeigen, dass sich die medizinische Vorrichtung 1 gerade in einem Zustand befindet, in dem ein Sprachbefehl zeitnah umgesetzt werden muss. Dies kann z.B. der Fall sein, wenn eine Systemkomponente gerade verfahren wird. Dann muss z.B. ein Stopp-Befehl mit einiger Wahrscheinlichkeit zügig umgesetzt werden. Die adaptive Zeitspanne AZS sollte folglich verkürzt werden, um rasch mit der weiteren Verarbeitung fortzufahren. Umgekehrt kann die adaptive Zeitspanne AZS ggf. verlängert werden, der Systemzustand S1 anzeigt, dass sich die medizinische Vorrichtung 1 in Ruhe oder in einem Stand-by-Modus befindet.

Mit der in Schritt S40-C bestimmten adaptiven Zeitspanne AZS wird in Schritt S40-D das Ende EN der Spracheingabe festgelegt. Dazu kann Schritt S40-D die Teilschritte S40-D-0, S40-D-1, S40-D-2 aufweisen. Grundsätzlich wird die Spracheingabe in diesem Ausführungsbeispiel als beendet angesehen, wenn, nachdem die Bedienperson eine Sprechaktivität zum Zeitpunkt T0 eingestellt hat, innerhalb der adaptiven Zeitspanne AZS keine weitere Spracheingabe mehr im Audiosignal E1 festgestellt wird. Dazu wird in Schritt S40-D-0 zunächst ein Zeitpunkt T0 festgestellt, an dem das Audiosignal E1 keine Spracheingabe enthält. Technisch kann dabei, wie in Schritt S40-A, eine Aktivitätserkennung verwendet werden. In Schritt S40-D-1 wird ein "Timer" getriggert, welcher die Zeit misst, seit der keine menschliche Stimme mehr in dem Audiosignal E1 erkannt wurde. Erreicht diese Zeit die adaptive Zeitspanne AZS, wird die Spracheingabe als beendet angesehen und der Zeitpunkt T0 kann als Ende EN der Spracheingabe gesetzt werden. Andernfalls springt die Verarbeitung über den Wiederholungsschritt S40-D-2 wieder zurück zu Schritt S40-B.

In Schritt S40-E wird auf Grundlage des erkannten Endes EN der Sprachdatenstrom E2 bereitgestellt. Der Sprachdatenstrom E2 entspricht dabei dem Audiosignal E1 zwischen dem erkannten Beginn BE und dem anhand des Gehalts der Spracheingabe dynamisch festgelegten Ende EN der Spracheingabe. Gemäß einigen Implementierungen kann der Sprachdatenstrom E2 das (ggf. digitalisierte) Audiosignal E1 zwischen Beginn BE und Ende EN umfassen. Gemäß anderen Implementierungen kann der Sprachdatenstrom E2 die Textinformation (also das Transkript T) zwischen Beginn BE und Ende EN umfassen.

Der Sprachdatenstrom E2 wird dann in dem darauffolgenden Schritt S50 weiter analysiert, um ein oder mehrere Sprachbefehle zu ermitteln. Gegenüber der "rollenden" Analyse zur dynamischen Festlegung der adaptiven Zeitspanne AZS in Schritt S40 hat dies den Vorteil, dass zumindest etwas mehr Zeit für die Analyse zur Verfügung steht. Mit einer solchen zweistufigen Analyse des Audiosignals E1 kann folglich eine bedarfsgerechte Anpassung der "Zuhördauer" mit einer anschließenden qualitativ hochwertigen Auswertung der in der Zuhördauer aufgenommenen Spracheingaben kombiniert werden.

**Figur 8** zeigt ein Ablaufdiagramm einer weiteren, nicht beanspruchten alternativen Ausführungsform eines Verfahrens zur Verarbeitung eines Audiosignals E1 und insbesondere zur Bestimmung eines Sprachdatenstroms E2 aus dem Audiosignal E1. Die Reihenfolge der Verfahrensschritte ist weder durch die dargestellte Abfolge noch durch die gewählte Nummerierung beschränkt. So kann die Reihenfolge der Schritte ggf. vertauscht und einzelne Schritte können weggelassen werden. Die in Figur 8 dargestellten Schritte können insbesondere im Rahmen von Schritt S40 aus Figur 3 ausgeführt werden. Mit gleichen Bezugszeichen wie in Figur 4 bezeichnete Schritte bezeichnen identische Verfahrensschritte wie in Figur 4.

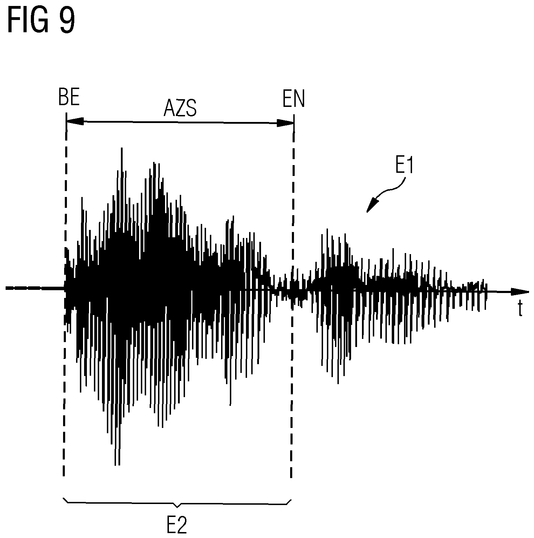

Die in Figur 8 gezeigten Verfahrensschritte zielen ebenfalls darauf ab, dynamisch zu erkennen, wann eine Spracheingabe der Bedienerperson abgeschlossen ist und mit der umfassenden Analyse der Spracheingabe begonnen werden kann (z.B. im Rahmen von Schritt S50). In **Figur 9** ist ein Audiosignal E1 und ein daraus bereitgestellter Sprachdatenstrom E2 schematisch dargestellt.

In einem ersten Schritt S40-A wird in dem Audiosignal E1 ein Beginn BE einer Spracheingabe der Bedienperson erkannt. Schritt S40-A entspricht dabei Schritt S40-A aus Figur 4. In Schritt S40-B erfolgt eine fortlaufende und im Wesentlichen in Echtzeit stattfindende Analyse des Audiosignals E1 durch den Sprachanalysealgorithmus A1. Schritt S40-B entspricht dabei Schritt S40-B aus Figur 4.

In Schritt S40-C' wird basierend auf dem Sprachanalyseergebnis eine adaptive Zeitspanne AZS bestimmt. Im Unterschied zur vorherigen Ausführungsform dient die in Schritt S40-C' bestimmte adaptive Zeitspanne AZS nicht als Timeout sondern als absoluter "Cut-off" nach dessen Ablauf die Spracheingabe der Bedienperson als beendet angesehen und abgerochen wird (vgl. Figur 9). Dadurch kann ggf. eine laufende Spracheingabe abgebrochen werden. Optional kann in Schritt S40 entschieden werden, ob ein Beenden der Spracheingabe unter Verwendung eines Timeouts (also gemäß Figur 4 - Option 1) oder Cutoffs (also gemäß Figur 8 - Option 2) erfolgt. Dies kann z.B. basierend auf dem Systemzustand S1 oder der fortlaufenden Analyse der Spracheingabe erfolgen. Wird z.B. ein kritischer Zustand detektiert, der ein sofortiges Umsetzen eines Sprachbefehls erfordert, kann Option 2 gewählt werden.

Wie die adaptive Zeitspanne AZS auch im Rahmen von Figur 8 festgelegt werden kann, entspricht wieder der in Zusammenhang mit Figur 4 geschilderten Ausführungsform. Insbesondere kann eine bisherige Dauer D, eine Tokenisierungsinformation, und/oder eine semantische Information verwendet werden, um die adaptive Zeitspanne AZS geeignet festzulegen.

Mit der in Schritt S40-C' bestimmten adaptiven Zeitspanne AZS wird in Schritt S40-D' das Ende EN der Spracheingabe festgelegt. Die Spracheingabe wird in Schritt S40-D' dann als beendet angesehen, wenn ab dem erkannten Beginn BE der Spracheingabe die adaptive Zeitspanne AZS abgelaufen ist.

In Schritt S40-E wird auf dieser Grundlage der Sprachdatenstrom E2 bereitgestellt, wobei Schritt S40-E in Figur 8 Schritt S40-E in Figur 4 entspricht.

Während Ausführungsbeispiele insbesondere unter Bezugnahme auf die Figuren detailliert beschrieben wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendung und den Aufbau in keiner Weise einschränken sollen. Vielmehr wird dem Fachmann durch die vorausgehende Beschreibung ein Leitfaden für die Umsetzung von mindestens einem Ausführungsbeispiel gegeben, wobei diverse Abwandlungen, insbesondere alternative oder zusätzliche Merkmale und/oder Abwandlung der Funktion und/oder Anordnung der beschriebenen Bestandteile, nach Wunsch des Fachmanns vorgenommen werden können, ohne dass dabei von dem in den angehängten Ansprüchen jeweils festgelegten Gegenstand abgewhichen wird und/oder deren Schutzbereich verlassen wird.

## Patentansprüche

1. Computer-implementiertes Verfahren zur Verarbeitung eines Audiosignals (E1) mit den Schritten:
- Empfangen (S20) des Audiosignals (E1);
- Erkennen (S40-A) eines Beginns (BE) einer Spracheingabe einer Bedienperson in dem Audiosignal (E1);
- Analysieren (S40-B) des Audiosignals (E1) im Wesentlichen in Echtzeit ab dem erkannten Beginn (BE) der Spracheingabe zur Bereitstellung eines Sprachanalyseergebnisses;
- Festlegen (S40-D, S40-D') eines Endes (EN) der Spracheingabe basierend auf dem Sprachanalyseergebnis; und
- Bereitstellen (S40-E) eines Sprachdatenstroms (E2) basierend auf dem Audiosignal (E1) zwischen dem erkannten Beginn (BE) und dem festgelegten Ende (EN)
- Anpassen (S40-C) einer adaptiven Zeitspanne (AZS) basierend auf dem Sprachanalyseergebnis;
wobei der Schritt des Festlegens (S40-D) des Endes (EN) der Spracheingabe umfasst:
- Erfassen (S40-D-0) eines Zeitpunkts (T0), an dem das Audiosignal (E1) keine Spracheingabe enthält;
- Festlegen (S40-D-1) des Endes (EN) der Spracheingabe auf den erfassten Zeitpunkt (T0), falls ausgehend vom erfassten Zeitpunkt (T0) innerhalb der adaptiven Zeitspanne (AZS) kein neuerlicher Beginn (BE) einer Spracheingabe erkannt wird.

2. Verfahren nach Anspruch 1, ferner mit:
- Wiederholen (S40-D-2) des Schritts des Erfassens (S40-D-0) solange bis ausgehend von dem erfassten Zeitpunkt (T0) innerhalb der adaptiven Zeitspanne (AZS) kein neuerlicher Beginn (BE) einer Spracheingabe erkannt wird;
- wobei während des Wiederholens (S40-D-2) der Schritt des Analysierens (S40-B) fortlaufend durchgeführt wird und die adaptive Zeitspanne basierend auf dem so erhaltenen Sprachanalyseergebnis fortlaufend angepasst wird (S40-C).

3. Verfahren nach einem der Ansprüche 1 oder 2, bei dem:
- der Schritt der Analyse (S40-B) des Audiosignals (E1) ein Ermitteln (S40-B-0) einer bisherigen Dauer (D) der Spracheingabe ab dem erkannten Beginn (BE) umfasst;
- das Sprachanalyseergebnis (E3) die bisherige Dauer (D) der Spracheingabe umfasst, und
- im Schritt des Anpassens (S40-C, S40-C') die adaptive Zeitspanne (AZS) in Abhängigkeit der bisherigen Dauer (D) adaptiert wird, wobei die adaptive Zeitspanne (AZS) insbesondere derart adaptiert wird, dass die adaptive Zeitspanne (AZS) wenigstens abschnittsweise mit der bisherigen Dauer (D) ansteigt.

4. Verfahren nach einem der vorhergehenden Ansprüche, bei dem:
- der Schritt der Analyse (S40-B) des Audiosignals (E1) ein Tokenisieren (S40-B-2) zur Segmentierung von Buchstaben, Wörtern und/oder Sätzen innerhalb des Audiosignals (E1) umfasst;
- das Sprachanalyseergebnis eine zugehörige Tokenisierungsinformation umfasst.

5. Verfahren nach Anspruch 4 in Verbindung mit einem der Ansprüche 1 bis 3, bei dem:
- die Tokenisierungsinformation anzeigt, ob die Bedienperson einen momentanen Satz zu Ende gesprochen hat; und
im Schritt des Bestimmens (S40-C, S40-C'):
- die adaptive Zeitspanne (AZS) verkürzt wird, wenn die Tokenisierungsinformation anzeigt, dass die Bedienperson einen momentanen Satz zu Ende gesprochen hat; und/oder
- die adaptive Zeitspanne (AZS) verlängert wird, wenn die Tokenisierungsinformation anzeigt, dass die Bedienperson einen momentanen Satz nicht zu Ende gesprochen hat.

6. Verfahren nach einem der vorhergehenden Ansprüche, bei dem:
- der Schritt der Analyse (S40-B) des Audiosignals (E1) eine semantische Analyse (S40-B-3) des Audiosignals (E1) zur Erfassung einer auf einen Sprachbefehl der Bedienperson gerichteten Nutzerintention umfasst;
- das Sprachanalyseergebnis (E3) eine entsprechende semantische Information umfasst.

7. Verfahren nach Anspruch 6 in Verbindung mit einem der Ansprüche 1 bis 5, bei dem:
- die semantische Information anzeigt, ob das Audiosignal (E1) ein oder mehrere Nutzerintentionen enthält oder nicht; und, im Schritt des Bestimmens (S40-C, S40-C'):
- die adaptive Zeitspanne (AZS) verkürzt wird, wenn die semantische Information anzeigt, dass das Audiosignal (E1) wenigstens eine Nutzerintention enthält; und/oder
- die adaptive Zeitspanne (AZS) verlängert wird, wenn die semantische Information anzeigt, dass das Audiosignal (E1) bisher keine Nutzerintention enthält.

8. Verfahren zur Steuerung einer gegenständlichen, insbesondere medizinischen, Vorrichtung (1), umfassend:
- Erfassen (S10) eines Audiosignals (E1) enthaltend eine auf die Steuerung der Vorrichtung (1) gerichtete Spracheingabe einer Bedienperson der Vorrichtung (1);
- Verarbeiten (S40) des Audiosignals gemäß einem der Ansprüche 1 bis 7;
- Ermitteln (S50) ein oder mehrerer Sprachbefehle basierend auf dem Sprachdatenstrom (E2);
- Erzeugen (S60) eines oder mehrerer Steuersignale (C1) basierend auf den ein oder mehreren Sprachbefehlen, welche Steuersignale (C1) geeignet sind, die Vorrichtung (1) entsprechend den ermittelten Sprachbefehlen zu steuern; und
- Eingabe (S70) der ein oder mehreren Steuersignale (C1) in die Vorrichtung (1).

9. Verfahren nach Anspruch 8, bei dem:
- der Schritt der Analyse (S40-B) des Audiosignals (E1) ein Anwenden eines ersten Computerlinguistik-Algorithmus (A1) auf das Audiosignal (E1) umfasst;
- der Schritt des Ermittelns (S50) ein oder mehrerer Sprachbefehle ein Anwenden eines zweiten Computerlinguistik-Algorithmus (A2) auf den Sprachdatenstrom (E2) umfasst; und
- der erste Computerlinguistik-Algorithmus (A1) von dem zweiten Computerlinguistik-Algorithmus (A2) verschieden ist.

10. Sprachanalysevorrichtung (10) zur Verarbeitung eines Audiosignals (E1) mit:
- einer Schnittstelle (31) zum Empfangen eines Audiosignals (E1); und
- einer Steuerungsvorrichtung (3), wobei die Steuerungsvorrichtung (3) dazu ausgebildet ist:
- eines Beginns (BE) einer Spracheingabe einer Bedienperson in dem Audiosignal (E1) zu erkennen;
- das Audiosignals (E1) im Wesentlichen in Echtzeit ab dem erkannten Beginn (BE) der Spracheingabe zur Bereitstellung eines Sprachanalyseergebnisses zu analysieren (S40-B);
- ein Ende (EN) der Spracheingabe basierend auf dem Sprachanalyseergebnis, insbesondere variable, festzulegen (S40-D);
- einen Sprachdatenstroms (E2) basierend auf dem Audiosignal (E1) zwischen dem erkannten Beginn (BE) und dem festgelegten Ende (EN) bereitzustellen (S40-E); und
- eine adaptive Zeitspanne (AZS) basierend auf dem Sprachanalyseergebnis anzupassen (S40-C),
wobei die Steuerungsvorrichtung (3) ferner dazu ausgebildet ist beim Festlegen (S40-D) des Endes (EN) der Spracheingabe:
- einen Zeitpunkt (T0) zu erfassen, an dem das Audiosignal (E1) keine Spracheingabe enthält, und
- das Ende (EN) der Spracheingabe auf den erfassten Zeitpunkt (T0) festzulegen (S40-D-1), falls ausgehend vom erfassten Zeitpunkt (T0) innerhalb der adaptiven Zeitspanne (AZS) kein neuerlicher Beginn (BE) einer Spracheingabe erkannt wird.

11. Medizinisches System (100) umfassend:
- eine Sprachanalysevorrichtung (10) nach Anspruch 10; und
- eine medizinische Vorrichtung (1) zur Durchführung einer medizinischen Prozedur.

12. Computerprogrammprodukt, welches ein Programm umfasst und direkt in einen Speicher einer programmierbaren Recheneinheit ladbar ist, mit Programmmitteln, um ein Verfahren nach den Ansprüchen 1 bis 9 auszuführen, wenn das Programm ausgeführt wird.

13. Computerlesbares Speichermedium, auf welchem lesbare und ausführbare Programmabschnitte gespeichert sind, um alle Schritte der Verfahren nach einem der Ansprüche 1 bis 9 auszuführen, wenn die Programmabschnitte ausgeführt werden.

## Claims

1. Computer-implemented method for processing an audio signal (E1) with the steps:
- receiving (S20) the audio signal (E1);
- recognising (S40-A) a beginning (BE) of operator speech input in the audio signal (E1);
- analysing (S40-B) the audio signal (E1) substantially in real time from the recognised beginning (BE) of the speech input to provide a speech analysis result;
- defining (S40-D, 540-D') an end (EN) of the speech input based on the speech analysis result; and
- providing (S40-E) a speech data stream (E2) based on the audio signal (E1) between the recognised beginning (BE) and the defined end (EN);
- adjusting (S40-C) an adaptive time interval (AZS) based on the speech analysis result;
wherein the step of defining (S40-D) the end (EN) of the speech input comprises:
- capturing (S40-D-0) a time (T0) at which the audio signal (E1) does not contain any speech input;
- defining (S40-D-1) the end (EN) of the speech input at the captured time (T0) if no new beginning (BE) of speech input is recognised starting from the captured time (T0) within the adaptive time interval (AZS).

2. Method according to claim 1 further comprising:
- repeating (S40-D-2) the step of capturing (S40-D-0) until no new beginning (BE) of speech input is recognised starting from the captured time (T0) within the adaptive time interval (AZS) ;
- wherein during the repetition (S40-D-2), the step of analysing (S40-B) is performed continuously and the adaptive time interval is continuously adjusted (S40-C) based on the speech analysis result obtained in this way.

3. Method according to one of claims 1 or 2 in which:
- the step of analysing (S40-B) the audio signal (E1) comprises ascertaining (S40-B-0) a previous duration (D) of the speech input from the recognised beginning (BE);
- the speech analysis result (E3) comprises the previous duration (D) of the speech input, and
- in the step of adjusting (S40-C, S40-C'), the adaptive time interval (AZS) is adapted depending on the previous duration (D), wherein the adaptive time interval (AZS) is in particular adapted in such a way that the adaptive time interval (AZS) increases at least in sections with the previous duration (D).

4. Method according to one of the preceding claims in which:
- the step of analysing (S40-B) the audio signal (E1) comprises tokenising (S40-B-2) for segmenting letters, words and/or sentences within the audio signal (E1);
- the speech analysis result comprises associated tokenisation information.

5. Method according to claim 4 in conjunction with one of claims 1 to 3 in which:
- the tokenisation information indicates whether the operator has finished speaking a current sentence; and
in the step of determining (S40-C, 540-C'):
- the adaptive time interval (AZS) is shortened if the tokenisation information indicates that the operator has finished speaking a current sentence; and/or
- the adaptive time interval (AZS) is extended if the tokenisation information indicates that the operator has not finished speaking a current sentence.

6. Method according to one of the preceding claims in which:
- the step of analysing (S40-B) the audio signal (E1) comprises a semantic analysis (S40-B-3) of the audio signal (E1) in order to capture a user intention directed at a speech command of the operator;
- the speech analysis result (E3) comprises corresponding semantic information.

7. Method according to claim 6 in conjunction with one of claims 1 to 5 in which:
- the semantic information indicates whether or not the audio signal (E1) contains one or more user intentions; and, in the step of determining (S40-C, 540-C'):
- the adaptive time interval (AZS) is shortened if the semantic information indicates that the audio signal (E1) contains at least one user intention; and/or
- the adaptive time interval (AZS) is extended if the semantic information indicates that the audio signal (E1) does not as yet contain any user intention.

8. Method for controlling a physical, in particular medical, apparatus (1) comprising:
- capturing (S10) an audio signal (E1) containing speech input from an operator of the apparatus (1) directed at controlling the apparatus (1);
- processing (S40) the audio signal according to one of claims 1 to 7;
- ascertaining (S50) one or more speech commands based on the speech data stream (E2);
- generating (S60) one or more control signals (C1) based on the one or more speech commands, the control signals (C1) being suitable for controlling the apparatus (1) according to the ascertained speech commands; and
- inputting (S70) the one or more control signals (C1) into the apparatus (1).

9. Method according to claim 8 in which:
- the step of analysing (S40-B) the audio signal (E1) comprises applying a first computational linguistics algorithm (A1) to the audio signal (E1);
- the step of ascertaining (S50) one or more speech commands comprises applying a second computational linguistics algorithm (A2) to the speech data stream (E2); and
- the first computational linguistics algorithm (A1) is different from the second computational linguistics algorithm (A2).

10. Speech analysis apparatus (10) for processing an audio signal (E1) with:
- an interface (31) for receiving an audio signal (E1); and
- a control apparatus (3), wherein the control apparatus (3) is embodied to:
- recognise a beginning (BE) of operator speech input in the audio signal (E1);
- analyse (S40-B) the audio signal (E1) substantially in real time from the recognised beginning (BE) of the speech input to provide a speech analysis result;
- define (S40-D) an end (EN) of the speech input based on the speech analysis result, in particular in a variable manner;
- provide (S40-E) a speech data stream (E2) based on the audio signal (E1) between the recognised beginning (BE) and the defined end (EN); and
- adjust (S40-C) an adaptive time interval (AZS) based on the speech analysis result,
wherein the control apparatus (3) is further embodied, when defining (S40-D) the end (EN) of the speech input:
- to capture a time (T0) at which the audio signal (E1) does not contain any speech input, and
- to define (S40-D-1) the end (EN) of the speech input at the captured time (T0) if no new beginning (BE) of a speech input is recognised starting from the captured time (T0) within the adaptive time interval (AZS).

11. Medical system (100) comprising:
- a speech analysis apparatus (10) according to claim 10; and
- a medical apparatus (1) for performing a medical procedure.

12. Computer program product, which comprises a program and can be loaded directly into a memory of a programmable computing unit, with program means for executing a method according to claims 1 to 9 when the program is executed.

13. Computer readable storage medium on which readable and executable program sections are stored in order to execute all the steps of the method according to one of claims 1 to 9 when the program sections are executed.

## Revendications

1. Procédé mis en œuvre par ordinateur de traitement d'un signal (E1) audio comprenant les stades :
- réception (S20) du signal (E1) audio ;
- identification (S40-A) d'un début (BE) d'une entrée vocale d'une personne de service dans le signal (E1) audio ;
- analyse (S40-B) du signal (E1) audio sensiblement en temps réel à partir du début (BE) identifié de l'entrée vocale pour disposer d'un résultat d'analyse vocale ;
- constatation (S40-D, S-40-D') d'une fin (EN) de l'entrée vocale sur la base du résultat de l'analyse vocale ; et
- mise à disposition (S40-E) d'un flux (E2) de données vocales sur la base du signal (E1) audio entre l'identification du début (BE) et la constatation de la fin (EN)
- adaptation (S40-C) d'un laps de temps (AZS) adaptatif sur la base du résultat de l'analyse vocale ;
dans lequel le stade de la constatation (S40-D) de la fin (EN) de l'entrée vocale comprend :
- détection (S40-D-0) d'un instant (T0), où le signal (E1) audio ne contient pas d'entrée vocale ;
- constatation (S40-D-1) de la fin (EN) de l'entrée vocale à l'instant (T0) détecté, si, à partir de l'instant (T0) détecté dans le laps de temps (AZS) adaptatif, on n'a pas identifié de début (BE) nouveau d'une entrée vocale.

2. Procédé suivant la revendication 1, comprenant en outre :
- répétition (S40-D-2) du stade de la détection (S40-D-0) jusqu'à ce que, à partir de l'instant (T0) détecté dans le laps de temps (AZS) adaptatif, on n'a pas détecté de début (BE) nouveau d'une entrée vocale ;
- dans lequel pendant la répétition (S40-D-2) on effectue en continu le stade de l'analyse (S40-B) et on adapte en continu le laps de temps adaptatif (S40-C) sur la base du résultat de l'analyse vocale ainsi obtenue.

3. Procédé suivant l'une des revendications 1 ou 2, dans lequel :
- le stade de l'analyse (S40-B) du signal (E1) audio comprend une détermination (S40-B-0) d'une durée (D) jusqu'ici de l'entrée vocale à partir de l'identification du début (BE) ;
- le résultat (E3) de l'analyse vocale comprend la durée (D) jusqu'ici de l'entrée vocale, et
- dans le stade de l'adaptation (S40-C, S40-C') on adapte le laps de temps (AZS) adaptatif en fonction de la durée (D) jusqu'ici, dans lequel on adapte le laps de temps (AZS) adaptatif, en particulier de manière à ce que le laps de temps (AZS) adaptatif augmente au moins par tronçon avec la durée (D) jusqu'ici.

4. Procédé suivant l'une des revendications précédentes, dans lequel :
- le stade de l'analyse (S40-B) du signal (E1) audio comprend une tokènisation (S40-B-2) pour la segmentation de lettres, de mots et/ou de phrases dans le signal (E1) audio ;
- le résultat de l'analyse vocale comprend une information de tokènisation, qui en fait partie.

5. Procédé suivant la revendication 4 en liaison avec l'une des revendications 1 à 3, dans lequel :
- l'information de tokènisation indique si la personne de service a prononcé une phrase instantanée jusqu'à la fin ; et dans le stade de la détermination (S40-C, S40-C') :
- on écourte le laps de temps (AZS) adaptatif, si l'information de tokènisation indique que la personne de service a prononcé une phrase instantanée jusqu'à la fin ; et/ou
- on prolonge le laps de temps (AZS) adaptatif, si l'information de tokènisation indique que la personne de service n'a pas prononcé une phrase instantanée jusqu'à la fin.

6. Procédé suivant l'une des revendications précédentes, dans lequel :
- le stade de l'analyse (S40-B) du signal (E1) audio comprend une analyse (S40-B-3) sémantique du signal (E1) audio pour la production d'une information d'utilisateur visant une instruction vocale de la personne de service ;
- le résultat (E3) de l'analyse vocale comprend une information sémantique correspondante.

7. Procédé suivant la revendication 6 en liaison avec l'une des revendications 1 à 5, dans lequel :
- l'information sémantique indique si le signal (E1) audio contient une ou plusieurs intentions d'utilisateur ou n'en contient pas ;
et, dans le stade de la détermination (S40-C, S40-C') :
- on écourte le laps de temps (AZS) adaptatif, si l'information sémantique indique que le signal (E1) audio contient au moins une intention d'utilisateur ; et/ou
- on prolonge le laps de temps (AZS) adaptatif, si l'information sémantique indique que le signal (E1) audio ne contient pas jusqu'ici d'intention d'utilisateur.

8. Procédé de commande d'une installation (1) concrète, notamment médicale, comprenant :
- détection (S10) d'un signal (E1) audio contenant une entrée vocale visant la commande de l'installation (1), d'une personne de service de l'installation (1) ;
- traitement (S40) du signal audio suivant l'une des revendications 1 à 7 ;
- détermination (S50) d'une ou plusieurs instructions vocales sur la base du flux (E2) de données vocales ;
- production (S60) d'un ou de plusieurs signaux (C1) de commande sur la base des instructions de la une ou des plusieurs instructions vocales, lesquels signaux (C1) de commande sont propres à commander l'installation (1) conformément aux instructions vocales déterminées ; et
- entrée (S70) du un ou des plusieurs signaux (C1) de commande dans l'installation (1).

9. Procédé suivant la revendication 8, dans lequel :
- le stade de l'analyse (S40-B) du signal (E1) audio comprend une application d'un premier algorithme (A1) de linguistique assisté par ordinateur au signal (E1) audio ;
- le stade de la détermination (S50) d'une ou de plusieurs instructions vocales comprend une application d'un deuxième algorithme (A2) de linguistique assisté par ordinateur au flux de données (E2) vocal ; et
- le premier algorithme (A1) de linguistique assisté par ordinateur est différent du deuxième algorithme (A2) de linguistique assisté par ordinateur.

10. Installation (10) d'analyse vocale pour le traitement d'un signal (E1) audio comprenant :
- une interface (31) de réception d'un signal (E1) audio ; et
- un dispositif (3) de commande, dans lequel le dispositif (3) de commande est constitué pour :
- identifier dans le signal (E1) audio un début (BE) d'une entrée vocale d'une personne de service ;
- analyser (S40-B) le signal (E1) audio sensiblement en temps réel à partir de l'identification du début (BE) de l'entrée vocale pour disposer d'un résultat d'analyse vocale ;
- constater (S40-D), notamment de manière variable, une fin (EN) de l'entrée vocale sur la base du résultat de l'analyse vocale ;
- disposer (S40-E) d'un flux (E2) de données vocales sur la base du signal (E1) audio entre l'identification du début (BE) et la constatation de la fin (EN) ; et
- adapter (S40-C) un laps de temps (AZS) adaptatif sur la base du résultat de l'analyse vocale,
dans lequel le dispositif (3) de commande est constitué en outre pour, lors de la constatation (S40-D) de la fin (EN) de l'entrée vocale :
- détecter un instant (T0) où le signal (E1) audio ne contient pas d'entrée vocale, et
- constater (S40-D-1) la fin (EN) de l'entrée vocale à l'instant (T0) détecté, si, à partir de l'instant (T0) détecté dans le laps de temps (AZS) adaptatif, un début (BE) nouveau d'une entrée vocale n'a pas été identifié.

11. Système (100) médical comprenant :
- une installation (10) d'analyse vocale suivant la revendication 10 ; et
- une installation (1) médicale pour effectuer une procédure médicale.

12. Produit de programme d'ordinateur, qui comprend un programme et qui peut être chargé directement dans une mémoire d'une unité informatique programmable, comprenant des moyens de programme, pour exécuter un procédé suivant l'une des revendications 1 à 9, lorsque le programme est exécuté.

13. Support de mémoire déchiffrable par ordinateur, sur lequel sont mises en mémoire des parties de programme déchiffrables et exécutables, afin d'exécuter tous les stades du procédé suivant l'une des revendications 1 à 9, lorsque les parties de programme sont exécutées.
